## Europäisches Patentamt
## European Patent Office
## Office européen des brevets

(19)

(11) **EP 0 425 595 B1**

(12) **EUROPÄISCHE PATENTSCHRIFT**

(45) Veröffentlichungstag und Bekanntmachung des Hinweises auf die Patenterteilung:
**07.02.1996 Patentblatt 1996/06**

(21) Anmeldenummer: **90903587.5**

(22) Anmeldetag: **28.02.1990**

(51) Int Cl.$^6$: **G06T 7/00**

(86) Internationale Anmeldenummer:
**PCT/DE90/00139**

(87) Internationale Veröffentlichungsnummer:
**WO 90/10273 (07.09.1990 Gazette 1990/21)**

(54) **VERFAHREN UND ANORDNUNG ZUR AUTOMATISCHEN OPTISCHEN KLASSIFIKATION VON PFLANZEN**

PROCESS AND ARRANGEMENT FOR AUTOMATIC OPTICAL CLASSIFICATION OF PLANTS

PROCEDE ET DISPOSITIF POUR LA CLASSIFICATION OPTIQUE AUTOMATIQUE DE PLANTES

(84) Benannte Vertragsstaaten:
**DE ES FR GB IT NL**

(30) Priorität: **28.02.1989 DE 3906215**

(43) Veröffentlichungstag der Anmeldung:
**08.05.1991 Patentblatt 1991/19**

(73) Patentinhaber: **Massen, Robert, Prof. Dr.
D-78337 Öhningen (DE)**

(72) Erfinder: **Massen, Robert, Prof. Dr.
D-78337 Öhningen (DE)**

(74) Vertreter: **Leiser, Gottfried, Dipl.-Ing. et al
D-81241 München (DE)**

(56) Entgegenhaltungen:
**GB-A- 1 494 357**

- **Proceedings of the 5th International Conference on Robot Vision and Sensory Controls, 29-31 Oktober 1985, Amsterdam, (NL), H. DELEPLANQUE et al.: "An intelligent robotic system for in vitro plantlet production", pages 305-313**

**Beschreibung**

Die Erfindung betrifft ein Verfahren zur automatischen optischen Klassifikation von Pflanzen, bei welchem von einer Videokamera ein Bild von jeweils einer Pflanze aufgenommen wird, die von der Videokamera gelieferten Videosignale des aufgenommenen Bildes bildpunktweise digitalisiert werden, ein digitalisiertes Bild der Pflanze in einem Bildspeicher gespeichert wird und das gespeicherte digitalisierte Bild zur Klassifikation der Pflanze durch einen Bildrechner ausgewertet wird.

Bei der Aufzucht von neuen Pflanzensorten, der stichprobenweisen Überprüfung von Saatgut-Chargen und biologischen Experimenten werden Pflänzlinge in großer Zahl unter definierten Klimabedingungen aufgezogen. Das Wachstum wird mehrmals optisch überprüft und anhand visueller Merkmale beurteilt. Für diese Beurteilung durch den Menschen werden rein qualitative Eigenschaften herangezogen, da es kaum Meßverfahren gibt, um an lebenden Pflanzen zerstörungsfrei die für das Pflanzenwachstum wichtigen Kenngrößen zu ermitteln. Die visuelle Beurteilung von Keimlingen, welche oft auf Nährböden oder mit Nährlösung getränktem Filterpapier unter streng kontrollierten Bedingungen aufwachsen, ist ein wichtiger Arbeitsschritt bei der Erforschung neuer Spezies und der Züchtung hochwertiger Pflänzlinge.

Neben dem Fehlen zuverlässiger quantitativer Meßdaten ist die visuelle Beurteilung durch den Menschen zeit- und kostenintensiv. Die prozeßbegleitende Datenerfassung, automatische Auswertung und direkte Regelung der Umgebungsbedingungen ist nur sehr eingeschränkt möglich, da die menschliche Beurteilung vor allem qualitative, aber kaum quantitative Daten liefert. Da bei Wachstums-Versuchen zahlreiche Pflänzlinge nicht oder nur unzureichend keimen, werden diese Fälle erst spät entdeckt. Wertvoller Wachstumsraum bleibt ungenutzt. Schlecht wachsende Pflänzlinge beanspruchen Gewächshaus-Ressourcen und stellen damit einen wesentlichen Kostenfaktor dar, welcher durch eine frühzeitige Erkennung dieser Pflanzen und Ersatz durch gut wachsende wesentlich verringert werden kann. Die automatische quantitative Klassifikation von Pflänzlingen ist daher nicht nur im experimentellen Wachstumsversuch, sondern auch bei der Reihenaufzucht von Pflänzlingen ein wichtiger Schritt hin zu einem automatisierbaren Agrarbetrieb mit einem optimierten Aufzuchtprogramm und einer begleitenden Qualitätskontrolle.

Ein Verfahren zur automatischen optischen Klassifikation von Pflanzen der eingangs angegebenen Art ist bereits aus den "Proceedings of the 5th International Conference on Robot Vision and Sensory Controls", 29.-31. Oktober 1985, Amsterdam, Seiten 305 bis 313, bekannt. Bei diesem bekannten Verfahren wird mit Hilfe einer senkrecht von oben auf die Pflanze gerichteten Schwarz-Weiß-Videokamera eine Grauwertaufnahme der Pflanze erstellt, das Bild der Pflanze durch Binarisierung vom Hintergrund segmentiert und die Gesamtfläche der Bildbereiche des der Pflanze zugeordneten Binärwerts ermittelt. Diese Gesamtfläche wird dann als eine der organischen Masse der Pflanze proportionale Kenngröße ausgegeben.

Dieses Verfahren stellt einen ersten Schritt zu einer quantitativen Beurteilung von Pflanzen dar, erweist sich jedoch als unzureichend. Die exakte Beurteilung von Pflänzlingen verlangt nämlich weitaus detailliertere Kenntnisse nicht nur der Gesamtmenge an organischer Masse, sondern auch der Form des Pflanzenwachstums (Anzahl der Blätter, Gestaltung der Blätter usw.), der Färbung einzelner Pflanzenzonen (Blattspitzen, Stengel usw.).Ein wesentliches Problem besteht bei diesem bekannten Verfahren ferner darin, daß es aufgrund der Helligkeitsunterschiede allein oft nicht möglich ist, das Bild der Pflanze eindeutig zu segmentieren, d.h. vom Bild des Hintergrunds zu unterscheiden. Die Pflanzen wachsen auf sehr unterschiedlichen Nährböden, deren Helligkeit sich oft nicht ausreichend von der Helligkeit der Pflanzenteile unterscheiden, die ihrerseits oft sehr unterschiedliche Helligkeitswerte haben. Dadurch kommt es oft zu Fehlbeurteilungen.

Aufgabe der Erfindung ist die Schaffung eines Verfahrens dieser Art, das eine eindeutige Segmentierung des Bildes der Pflanze ergibt und die Ermittlung von Form- und Farbmerkmalen ermöglicht.

Diese Aufgabe wird nach der Erfindung dadurch gelöst, daß das Bild der Pflanze von einer Farb-Videokamera aufgenommen wird, daß die digitalisierten Farb-Videosignale vor der Speicherung des digitalisierten Bildes bildpunktweise nach vorgegebenen Farbklassen klassifiziert werden, die einerseits dem Bild der Pflanze und andererseits dem Bild des Hintergrunds zugeordnet sind, daß die Segmentierung des Bildes der Pflanze vom Bild des Hintergrunds aufgrund der Zugehörigkeit der Bildpunkte zu den vorgegebenen Farbklassen erfolgt, daß aus dem segmentierten Bild der Pflanze geometrische Formmerkmale und Farbmerkmale ermittelt werden und daß die ermittelten Form- und Farbmerkmale zur Ableitung eines Qualitätsmaßes ausgewertet werden.

Die bei dem erfindungsgemäßen Verfahren angewendete Farbklassifikation nach vorgegebenen Farbklassen erlaubt in allen Fällen eine eindeutige Segmentierung des Bildes der Pflanze, da die Farbklassen für jede Pflanzenart und für jeden Hintergrund (Nährboden) so vorgegeben werden können, daß das Bild der Pflanze deutlich vom Hintergrund unterschieden werden kann. Dadurch ist es möglich, geometrische Formmerkmale, wie Anzahl der Blätter, Fläche und Umfang der Blätter, Winkel zwischen den Blättern usw. zu ermitteln und zur Ableitung des Qualitätsmaßes heranzuziehen. Durch Zuordnung unterschiedlicher Farbklassen zu verschiedenen Pflanzenteilen ist es darüber hinaus möglich, aus dem digitalisierten und gespeicherten Bild auch Farbmerkmale der Pflanze zu ermitteln und in die Ableitung des Qualitätsmaßes mit einzubeziehen.

Eine besonders vorteilhafte Ausgestaltungen des erfindungsgemäßen Verfahrens besteht darin, daß der Farbklassifikator die Farbklassen durch Vorzeigen von Bildausschnitten in einer interaktiven Trainingsphase lernt. Diese Trainingsphase erfordert keine Kenntnisse der digitalen Bildverarbeitung oder Programmierung, so daß sie auch von angelerntem Personal durchführbar ist.

Weiterbildungen des erfindungsgemäßen Verfahrens ermöglichen auch die Bestimmung der Pflanzenhöhe.

Weitere vorteilhafte Ausgestaltungen des erfindungsgemäßen Verfahrens sowie eine Anordnung zur Durchführung des Verfahrens sind in den Unteransprüchen gekennzeichnet.

Die Erfindung wird nachfolgend anhand der Zeichnung beispielshalber erläutert. In der Zeichnung zeigt:

Fig. 1    eine schematische Darstellung einer Anordnung zur automatischen optischen Klassifikation von Pflanzen,

Fig. 2    skizzenhaft die Bestimmung von Formmerkmalen, von Farbmerkmalen und der Höhe der Pflanzen mit der Anordnung von Fig. 1,

Fig. 3    die zur Bestimmung von Formmerkmalen und Farbmerkmalen verwendeten Bestandteile des Bildrechners,

Fig. 4    ein Blockschema des Bildrechners in der Anordnung von Fig. 1, und

Fig. 5    eine abgeänderte Ausführungsform der Schaltungsbestandteile von Fig. 3.

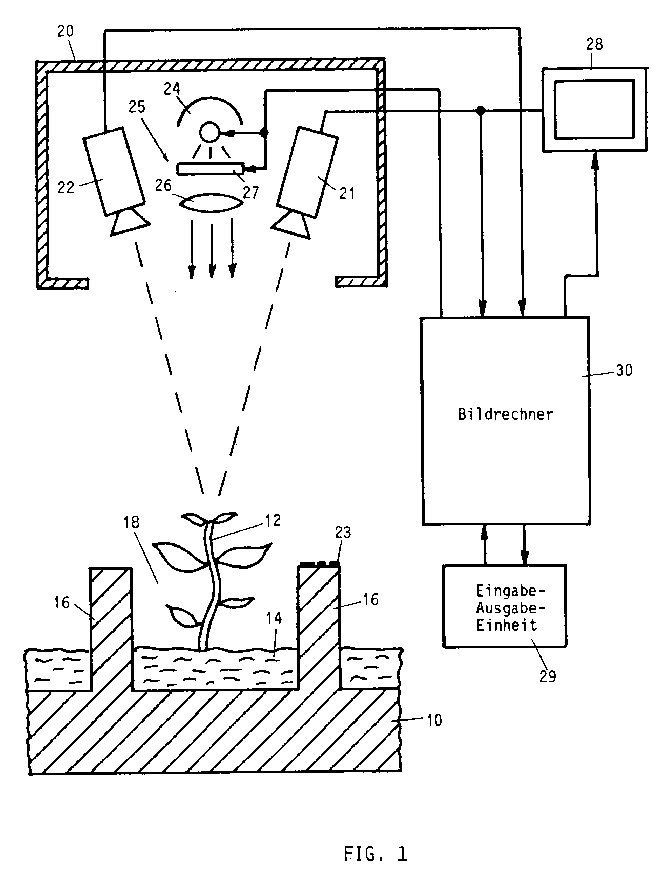

Fig. 1 zeigt schematisch eine Schnittansicht eines Behälters 10, in welchem die zu untersuchenden Pflanzen 12 auf einem Nährboden 14 wachsen. Der Behälter 10 kann durch Trennwände 16 in Fächer 18 unterteilt sein, wobei jedes Fach 18 eine Pflanze 12 enthält. Oberhalb des Behälters 10 ist ein Meßkopf 20 angeordnet, der zwei Farb-Videokameras 21 und 22 enthält, die in einem definierten Abstand voneinander angeordnet sind und von denen jede ein Bild einer Pflanze unter einem bekannten Winkel gegen die Vertikale aufnehmen kann. Der Behälter 10 und der Meßkopf 20 sind relativ zueinander so verstellbar, daß der Reihe nach jede Pflanze 12 in das Blickfeld der beiden Farb-Videokameras 21 und 22 gebracht werden kann. Hierzu kann beispielsweise der Meßkopf 20 in zwei Koordinatenrichtungen über dem feststehenden Behälter 10 verstellbar sein, oder der Behälter 10 kann in zwei Koordinatenrichtungen unter dem feststehenden Meßkopf 20 verstellbar sein. Ferner sind zusammengesetzte Bewegungen möglich, indem der Behälter 10 in einer Richtung unter dem Meßkopf 20 verschoben wird, während der Meßkopf 20 quer zur Bewegungsrichtung des Behälters 10 bewegt wird. Um jede Pflanze 12 im Behälter 10 eindeutig identifizieren zu können, können auf den Oberseiten der Trennwände 16 Codes 23, z.B. in Form von Bar-Codes, angebracht sein, die mit Hilfe des Meßkopfes 20 lesbar sind und beispielsweise die Koordinaten jeder Pflanze im Behälter angeben.

Der Meßkopf 20 enthält ferner eine Beleuchtungseinrichtung 24, mit der die jeweils von den Farb-Videokameras 21, 22 erfaßte Pflanze 12 von oben beleuchtet werden kann. Die Beleuchtungseinrichtung 24 kann durch eine konstante Lichtquelle oder durch eine gepulste Lichtquelle realisiert sein. Mit Hilfe der Beleuchtungseinrichtung 24 und eines Lichtmuster-Projektors 25, der ein Projektionsobjektiv 26 und einen Lichtmuster-Erzeuger 27 aufweist, ist es ferner möglich, ein von dem Lichtmuster-Erzeuger 27 geliefertes Lichtmuster auf die Pflanze 12 zu projizieren. Der Lichtmuster-Erzeuger 27 kann beispielsweise ein elektronisch steuerbarer Lichtmodulator sein. Ein bekanntes Beispiel für einen elektronisch steuerbaren Lichtmodulator ist ein Flüssigkristall-Bildschirm (LCD). Anstelle eines elektronisch steuerbaren Lichtmodulators kann auch ein unter Programmsteuerung motorisch verstellbares Transparent mit unterschiedlichen aufgeprägten Projektionsmustern nach Art eines Diapositivs verwendet werden. Der Zweck der Projektion eines Lichtmusters auf die Pflanze wird später erläutert.

Die Farb-Videokameras 21 und 22 können handelsübliche Fernseh - oder Videokameras sein, die das Bild der Pflanze in elektrische Videosignale umsetzen, die für die Wiedergabe eines Farbbildes geeignet sind. Vorzugsweise ist jede Farb-Videokamera durch eine CCD-Matrixkamera gebildet. Jede Farb-Videokamera liefert an drei Ausgängen drei Farbsignale, die die Farbauszüge in den Grundfarben Rot, Grün und Blau darstellen. Die Gesamtheit dieser drei Farbsignale wird, der üblichen Bezeichnungsweise entsprechend, nachfolgend als "RGB-Signale" bezeichnet.

Die von der Farb-Videokamera 21 gelieferten RGB-Bildsignale werden einem Monitor 28 zugeführt, auf dem das aufgenommene Bild sichtbar gemacht wird. Ferner werden die von den beiden Farb-Videokameras 21 und 22 gelieferten RGB-Signale einem Bildrechner 30 zugeführt, der diese Signale auswertet, um die Pflanze 12 automatisch gegenüber dem Hintergrund zu erkennen (die sog. "Segmentierung"), quantitative Formmerkmale zu bestimmen und eine Farbklassifizierung der Pflanzenteile durchzuführen. Die Pflanze wird dabei gleichzeitig nach den Merkmalen

-    geometrische Form
-    Farbe
-    Höhe

klassifiziert und ausgewertet. Der Bildrechner 30 liefert auch Steuersignale zu dem Lichtmuster-Erzeuger 27 und zu dem Monitor 28. Über eine Eingabe-Ausgabe-Einheit 29 wird die Verbindung zwischen dem Bildrechner 30 und dem Benutzer sowie gegebenenfalls mit einem übergeordneten Host-Rechner hergestellt.

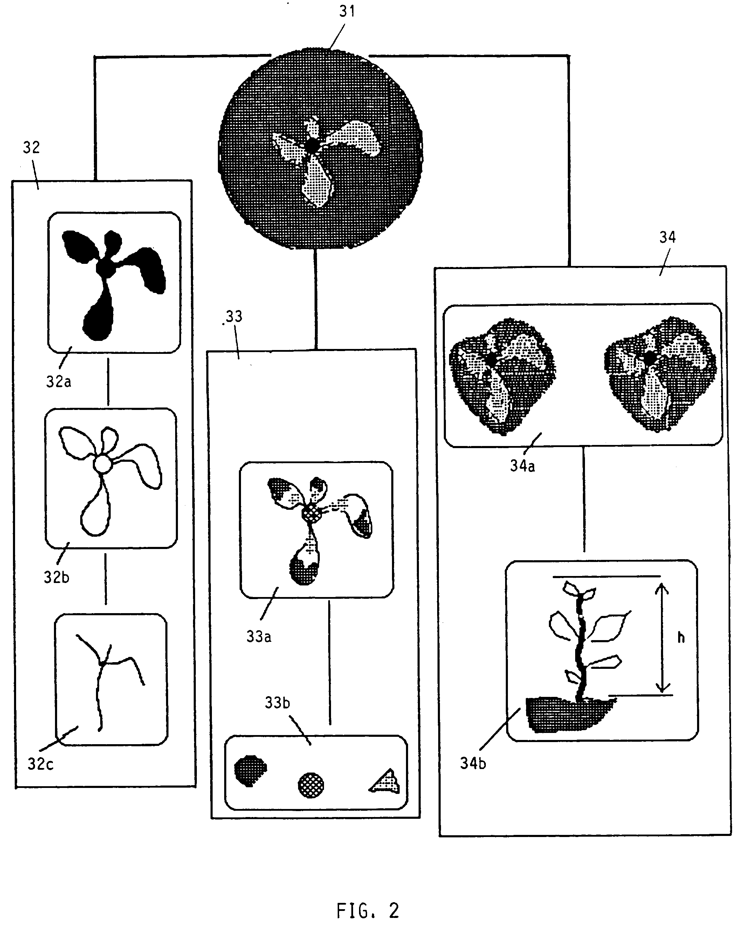

Fig. 2 zeigt schematisch, wie die von den Farb-Videokameras 21 und 22 aufgenommenen Bilder 31 vom Bildrechner 30 in drei Kanälen verarbeitet werden. Ein Formkanal 32 dient zur Klassifizierung und Auswertung von Merkmalen der geometrischen Form, ein Farbkanal 33 zur Klassifizierung und Auswertung von Farbmerkmalen und ein Höhenkanal 34 zur Bestimmung der Höhe der Pflanze. Die Verfahren zur Ermittlung dieser drei Merkmalsklassen mit Hilfe des Meßkopfes 20 und des Bildrechners 30 werden im folgenden näher beschrieben.

1. Klassifizierung und Auswertung der geometrischen Form

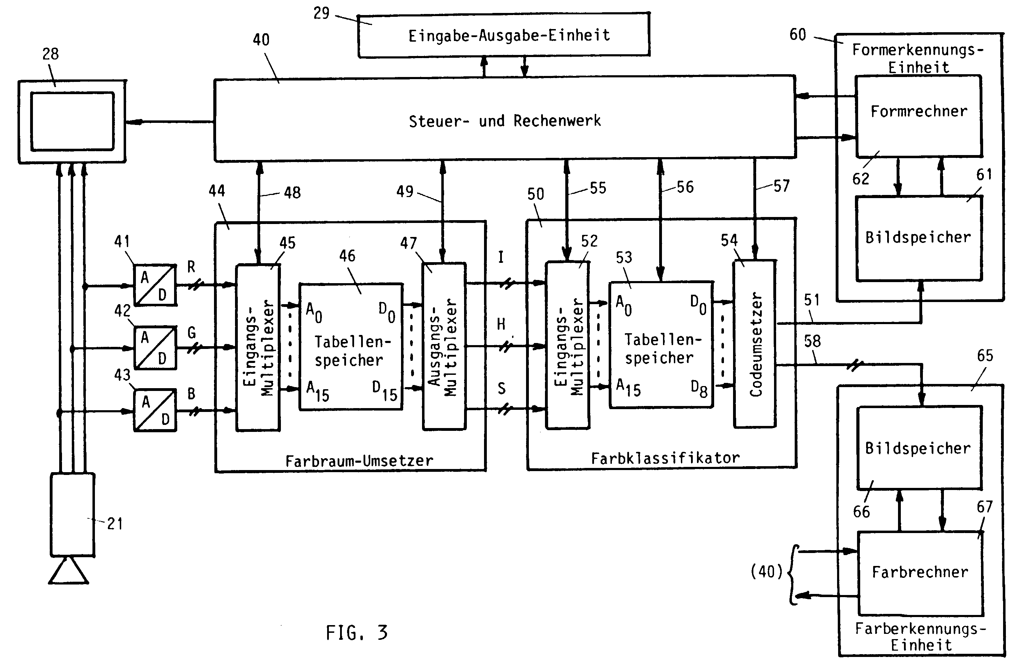

Für die Klassifizierung und Auswertung der geometrischen Form der Pflanze muß das Bild der Pflanze eindeutig vom Bild des Hintergrunds unterschieden werden. Dieser Vorgang wird als "Segmentierung" bezeichnet. Die Farbe des Nährbodens 14, auf dem die Pflanze wächst, kann von Weiß (bei Papierböden) über Gelb (bei Agar-Böden) bis zu Dunkelbraun (bei Torf-Mischungen) wechseln. Die Behälter 10 sind oft aus weißem Kunststoff, beispielsweise Styropor, hergestellt, wobei durch Verschmutzung der Helligkeits-Kontrast zwischen Pflanze und Hintergrund sehr gering sein kann. Über Helligkeitsunterschiede allein kann daher eine robuste Unterscheidung zwischen Pflanze und Hintergrund nicht durchgeführt werden. Deshalb erfolgt im Bildrechner 30 die Segmentierung durch eine bildpunktweise Farbklassifikation im Farbraum. Fig. 3 zeigt das Blockschema der hierfür verwendeten Bestandteile des Bildrechners 30.

Die Farb-Videokamera 21 liefert an drei Ausgängen drei analoge Farbsignale, nämlich das Rotsignal R, das Grünsignal G und das Blausignal B des aufgenommenen Farbbildes. Diese drei Farbsignale werden dem Monitor 28 zugeführt, der außerdem Steuersignale von einem Steuer- und Rechenwerk 40 empfängt, das im Bildrechner 30 enthalten ist. An jeden der drei Ausgänge der Farb-Videokamera 21 ist ferner ein Analog-Digital-Umsetzer 41, 42 bzw. 43 angeschlossen, der das ihm zugeführte Farbsignal bildpunktweise in ein digitales Signal umsetzt. Für jeden Bildpunkt (Pixel) des aufgenommenen Farbbildes erscheint also in Echtzeit am Ausgang jedes der drei Analog-Digital-Umsetzer 41, 42, 43 eine digitale Codegruppe, die die Intensität des zugeordneten Farbwerts mit einer durch die Stellenzahl der Codegruppe bestimmten Quantisierung darstellt. Im Hinblick auf die sich anschließende Weiterverarbeitung erfolgt beispielsweise die Quantisierung des Rotsignals R und des Blausignals B jeweils mit 5 Bits, also in 32 Stufen, und die Quantisierung des Grünsignals G mit 6 Bits, also in 64 Stufen, so daß die gesamte RGB-Farbinformation eines Bildpunktes durch ein 16 Bit-Wort dargestellt ist. Die 16 Bits der zu den nacheinander abgetasteten Bildpunkten gehörenden 16 Bit-Wörter erscheinen im Bildpunkttakt (z.B. 15 MHz) jeweils gleichzeitig an fünf parallelen Ausgängen des Analog-Digital-Umsetzers 41, an sechs parallelen Ausgängen des Analog-Digital-Umsetzers 42 und an fünf parallelen Ausgängen des Analog-Digital-Umsetzers 43.

An die 16 Ausgänge der Analog-Digital-Umsetzer 41, 42 und 43 ist ein Farbraum-Umsetzer 44 angeschlossen, der die digitalen RGB-Signale in digitale IHS-Signale umsetzt, also in drei Signale, die die Helligkeit I ("Intensity"), den Farbton H ("Hue") und die Sättigung S ("Saturation") darstellen. Dadurch wird das von der Farb-Videokamera aufgenommene Farbbild von dem RGB-Farbraum in den IHS-Farbraum umgerechnet. Der IHS-Farbraum ist weniger korreliert als der RGB-Farbraum und eignet sich daher besser für eine automatische Farbklassifizierung. Der IHS-Farbraum entspricht auch der Betrachtungsweise eines menschlichen Beobachters.

Für die Umrechnung gelten die folgenden Gleichungen:

$$I = \frac{R + G + B}{3}$$

$$S = 1 - \frac{3 \cdot min\ (R,G,B)}{I}$$

$$H = \frac{arc\ cos\ 0,5 \cdot \{\ [\ (R\text{-}G)\ +\ (R\text{-}B)\ ]\ \}}{\sqrt{(R\text{-}G)^2 + (R\text{-}B) \cdot (G\text{-}B)}}$$

Für R = G = B erhält man H = 0 (keine Farbinformation).

Damit die IHS-Signale an den Ausgängen des Farbraum-Umsetzers 44 bildpunktweise in Echtzeit, also im Bildpunkttakt von 15 MHz, erscheinen, ist der Farbraum-Umsetzer vorzugsweise als Tabellenrechner ausgebildet, in welchem für jede der $2^{16}$ möglichen Kombinationen von digitalen RGB-Signalen die zugeordnete Kombination von IHS-Signalen ebenfalls in Form eines 16 Bit-Worts abgespeichert ist. Der Farbraum-Umsetzer 44 enthält in diesem Fall einen Eingangs-Multiplexer 45, einen Tabellenspeicher 46 und einen Ausgangs-Multiplexer 47. Der Tabellenspeicher 46 ist beispielsweise durch ein 64k x 16 Bit-SRAM gebildet. Der Eingangs-Multiplexer 45 empfängt an seinen Eingängen die parallelen 16 Bit-Wörter von den Ausgängen der Analog-Digital-Umsetzer 41, 42, 43 und legt jedes dieser 16 Bit-Wörter als Adressencode an die Adresseneingänge $A_0$ bis $A_{15}$ des Tabellenspeichers 46 an, der daraufhin an seinen Datenausgängen $D_0$ bis $D_{15}$ das an der betreffenden Adresse gespeicherte 16 Bit-Wort zum Ausgangs-Multiplexer 47 liefert. An den 16 Ausgängen des Ausgangs-Multiplexers 47 erscheinen daher die jedem Bildpunkt zugeordneten IHS-Signale im Takt der Bildpunktabtastung in Echtzeit, wobei beispielsweise die Helligkeit I mit 5 Bits, der Farbton H mit 6 Bits und die Sättigung S mit 5 Bits quantisiert sind. Der richtige Ablauf dieser Funktionen wird durch Steuersignale gesteuert, die vom Steuer- und Rechenwerk 40 über eine Verbindung 48 zum Eingangs-Multiplexer 45 und über eine Verbindung 49 zum Ausgangs-Multiplexer 47 geliefert werden.

An die Ausgänge des Farbraum-Umsetzers 44 ist ein Farbklassifikator 50 angeschlossen, der jedes eintreffende IHS-Signal eines Bildpunktes in eine vorher gelernte Farbklasse oder Gruppe von Farbklassen klassifiziert und am Ausgang 51 ein Signal abgibt, das anzeigt, zu welcher Farbklasse oder Farbklassengruppe die durch das IHS-Signal dargestellte Farbe des Bildpunktes gehört. Für die Untersuchung von Pflanzen kann es beispielsweise eine Farbklasse "Grün" für Blätter, eine Farbklasse "Gelb" für Stengel und eine Farbklasse "Hintergrund" für alle übrigen Farben geben. Wenn das IHS-Signal eines Bildpunktes entweder in die Farbklasse "Grün" oder in die Farbklasse "Gelb" klassifiziert wird, gibt der Farbklassifikator 50 am Ausgang 51 für diesen Bildpunkt den entsprechenden Klassencode ab, beispielsweise das binäre Codezeichen "1" für "Pflanze". Wenn das IHS-Signal nicht in die der Pflanze zugeordneten Farbklassen klassifiziert wird, also zur Farbklasse "Hintergrund" gehört, gibt der Farbklassifikator 50 am Ausgang 51 das binäre Codezeichen "0" für "Hintergrund" ab. Das Ergebnis ist immer noch ein aus Bildpunkten aufgebautes Bild, aber der jedem Bildpunkt zugeordnete Wert ist keine Farbe mehr, sondern eine Klassenkennzeichnung. Auf diese Weise läßt sich das Bild der Pflanze vom Hintergrund trennen, so daß die Formmerkmale ausgewertet werden können.

Ein Problem bei dieser Farbklassifikation besteht darin, daß die Farben von Pflanzenteilen nicht eindeutig einem bestimmten Punkt im dreidimensionalen IHS-Farbraum zugeordnet werden können, sondern beträchtliche Streuungen aufweisen und daher irgendwo in einem größeren Bereich des IHS-Farbraums liegen können. Das Grün eines Blattes einer Pflanze weist gewöhnlich einen großen Bereich von Sättigungswerten auf; die den einzelnen Bildpunkten eines solchen Blattes zugeordneten IHS-Werte bilden daher einen "Cluster" ("Haufen", "Wolke") im dreidimensionalen IHS-Farbraum. Voneinander getrennte Cluster sind auch durchaus nicht ungewöhnlich. Der Farbklassifikator muß also einerseits wissen, welche Bereiche des IHS-Farbraums der "Pflanze" zuzuordnen sind, und er muß andererseits in der Lage sein, die im Bildpunkttakt eintreffenden IHS-Signale in Echtzeit zu klassifizieren, d.h. festzustellen, ob die Farbe des betreffenden Bildpunktes in einem der "Pflanze" zugeordneten Bereich liegt oder nicht.

Der in Fig. 3 dargestellte Farbklassifikator 50 ist so ausgebildet, daß er

- auf einfache Weise "trainiert" werden kann, also die der Pflanze oder verschiedenen Pflanzenteilen zugeordneten Farbklassen "lernen" kann;

- nach dem Lernen der Farbklassen die bildpunktweise Klassifizierung im Bildpunkttakt in Echtzeit durchführen kann;

- beide Funktionen mit besonders geringem Schaltungsaufwand durchführt.

Zu diesem Zweck ist der Farbklassifikator 50 in ähnlicher Weise wie der Farbraum-Umsetzer 44 als Tabellenrechner ausgebildet. Er enthält einen Eingangs-Multiplexer 52, einen Tabellenspeicher 53, der beispielsweise durch ein 64k x 8 Bit-SRAM gebildet ist, und einen Codeumsetzer 54. Diese Schaltungsblöcke empfangen über Verbindungen 55, 56 bzw. 57 Steuersignale vom Steuer- und Rechenwerk 40.

In gleicher Weise wie im Tabellenspeicher 46 des Farbraum-Umsetzers 44 ist auch im Tabellenspeicher 53 des Farbklassifikators 50 jede 8 Bit-Speicherzelle einem Punkt im dreidimensionalen IHS-Farbraum zugeordnet. Jedes vom Farbraum-Umsetzer 44 gelieferte 16 Bit-Wort wird über den Eingangs-Multiplexer 52 an die 16 Adresseneingänge $A_0$ bis $A_{15}$ des Tabellenspeichers 53 angelegt, wodurch die Speicherzelle adressiert wird, die der Farbe des gerade übertragenen Bildpunktes zugeordnet ist. Wenn der Farbklassifikator 50 fertig "trainiert" ist, ist in jeder Speicherzelle der Klassencode gespeichert, der der betreffenden Farbe zugeordnet worden ist. Der abgelesene Klassencode erscheint an den 8 Datenausgängen $D_0$ bis $D_8$ und wird zum Codeumsetzer 54 geliefert, der am Ausgang 51 für alle Klassencodes, die dem Bild der "Pflanze" zugeordnet sind, das Codezeichen "1" und für alle anderen Klassencodes das Codezeichen "0" abgibt.

Der Farbklassifikator 50 hat eine weitere Ausgangsgruppe 58, an der für einen später erläuterten Zweck detailliertere Klassencodes mit größerer Bitzahl abgegeben werden, beispielsweise die vollständigen 8 Bit-Wörter. Die Codeumsetzung kann am einfachsten dadurch erfolgen, daß in jedem 8 Bit-Wort eine bestimmte Bitstelle durch den Binärwert "1" oder "0" anzeigt, ob der betreffende Klassencode zum Bild der Pflanze oder zum Bild des Hintergrunds gehört. In diesem Fall werden einfach die Signale von dem dieser Bitstelle zugeordneten Datenausgang des Tabellenspeichers 53 zum Ausgang 51 übertragen.

Mit den im Bildpunkttakt an den Ausgängen 51 und 58 des Farbklassifikators 50 erscheinenden Codezeichen bzw. Codewörtern erfolgt die Klassifizierung der Bildpunktfarben in Echtzeit. Voraussetzung hierfür ist natürlich, daß im Tabellenspeicher 53 in jeder Speicherzelle der richtige Klassencode gespeichert ist. Wie bereits erwähnt wurde, geschieht die Zuordnung und Speicherung der Klassencodes durch Trainieren des Farbklassifikators. Dieses Trainieren kann mit dem beschriebenen Farbklassifikator in einfacher Weise durch bloßes Vorzeigen typischer Pflanzenteile in einer interaktiven Lernphase (sog. "überwachtes Lernen") erfolgen. Hierfür sind keine besonderen Kenntnisse erforderlich, so daß das Trainieren auch durch angelerntes Personal leicht vorgenommen werden kann.

Zum Trainieren des Farbklassifikators 50 wird zunächst der Inhalt aller Speicherzellen des Tabellenspeichers 53 gelöscht Dann wird mit Hilfe der Farb-Videokamera 21 ein Bild der Pflanze und des Hintergrundes aufgenommen und auf dem Monitor 28 dargestellt. Der Benutzer kreist auf dem Bildschirm mit Hilfe einer Markierung das Bild eines zu erkennenden Pflanzenteils ein und weist der Farbe dieses Pflanzenteils einen Klassencode zu. Beispielsweise kann der Pflanzenteil ein Blatt sein, und der zugeordnete Klassencode kann "Grün" sein. Der markierte Bereich soll möglichst viele Anteile an der zu erkennenden Farbe und möglichst wenig Anteile an anderen Farben haben. Diese Vorgänge geschehen unter Steuerung durch das Steuer- und Rechenwerk 40 des Bildrechners 30 mit Hilfe der Eingabe/Ausgabe-Einheit.

Im Farbraum-Umsetzer 44 und im Farbklassifikator 50 werden nur die Bildpunkte des markierten Bildbereichs ausgewertet. Für jeden Bildpunkt wird im Farbraum-Umsetzer der IHS-Farbwert ermittelt. Die diesem IHS-Farbwert zugeordnete Speicherzelle wird im Tabellenspeicher 53 adressiert, und der Inhalt dieser adressierten Speicherzelle wird inkrementiert. Wenn alle Bildpunkte des markierten Bildbereichs exakt den gleichen IHS-Farbwert hätten, wäre nach der Auswertung dieses Bildbereichs der Inhalt einer einzigen Speicherzelle sehr groß, während alle anderen Speicherzellen leer wären. In der Praxis tritt dieser Fall wegen der unvermeidlichen Helligkeits-, Farbton- und Sättigungsvariationen natürlich nicht ein. Man erhält vielmehr einen Bereich von Speicherzellen mit unterschiedlich großen Inhalten, von denen die meisten IHS-Farbwerten zugeordnet sind, die im IHS-Farbraum nahe beeinanderliegen, also einen "Cluster" bilden. Die Inhalte dieser Speicherzellen sind gewissermaßen ein Histogramm des untersuchten Bildbereichs.

Der beschriebene Vorgang wird mit möglichst vielen Pflanzenteilen wiederholt, um eine signifikante Cluster-Bildung im dreidimensionalen IHS-Farbraum zu erreichen. Am Ende der Trainingsphase werden die Inhalte aller Speicherzellen mit einem Schwellenwert verglichen. In diejenigen Speicherzellen, deren Inhalte häufig genug inkrementiert wurden und daher den Schwellenwert überschreiten, wird der zuvor festgelegte Klassencode eingeschrieben, während in alle anderen Speicherzellen der Klassencode für "Hintergrund" eingegeben wird. Vorzugsweise wird auch in alle Speicherzellen, die niedrigen Sättigungswerten zugeordnet sind, der Klassencode für "Hintergrund" eingeschrieben, da für Bereiche mit geringer Farbsättigung, die also nahezu schwarz oder nahezu weiß sind, der Begriff "Farbe" bedeutungslos ist.

Die so markierten Cluster sind im allgemeinen nicht dicht besetzt, weil man nicht davon ausgehen kann, daß während der Trainingsphase alle IHS-Farbvektoren, die im Inneren eines solchen Clusters liegen, in den untersuchten Bildbereichen auch tatsächlich angetroffen werden. Es ist daher erforderlich, Lücken innerhalb der Cluster zu schließen, damit später, wenn bei der Bildauswertung solche Farbvektoren auftreten, die betreffenden Bildpunkte richtig klassifiziert werden.

Eine Möglichkeit zum Füllen der Cluster besteht darin, daß die Cluster einer dreidimensionalen Dilatation mit anschließender Erosion unterzogen werden. Solche Verfahren sind für den Fall der zweidimensionalen Verarbeitung von binären Bildern unter dem Begriff "morphologische Bildoperationen" oder "Fermeture" bekannt. Sie werden hier auf einen dreidimensionalen Tabellenklassifikator angewendet, um trotz des immer unzureichenden Stichprobenumfangs deutliche und kompakte Cluster zu erhalten.

Ein anderes Lernverfahren, mit dem kompakte Cluster ohne Lücken erhalten werden können, besteht darin, daß bei der Bildpunktauswertung nicht nur der Inhalt der adressierten Speicherzelle inkrementiert wird, sondern auch die Inhalte der Speicherzellen mit im IHS-Farbraum benachbarten Adressen. Hierzu wird der Inhalt der vom IHS-Farbvektor adressierten Speicherzelle um eine Konstante $K_0$ erhöht, und die Inhalte der benachbarten Speicherzellen werden um eine Variable $K(i)$ erhöht, welche mit wachsendem Abstand von der adressierten Speicherzelle immer kleiner wird. Dies kann z.B. nach der Regel

$$K(i) = K_0/r^2$$

geschehen, wobei r die euklidische Distanz des der jeweils zu erhöhenden Speicherzelle i zugeordneten Punktes von dem der adressierten Speicherzelle zugeordneten Punkt im dreidimensionalen IHS-Farbraum ist. Durch dieses die Nachbarschaft berücksichtigende Lernen werden bereits bei der Bildpunktauswertung geschlossene Cluster ohne Lücken gebildet, so daß die Notwendigkeit des späteren Füllens der Cluster durch dreidimensionale Dilatation mit anschließender Erosion entfällt. Auch bei diesem Verfahren werden am Ende der Lernphase die Inhalte aller Speicherzellen mit einem festgelegten Schwellenwert verglichen, und in alle Speicherzellen, deren Inhalte den Schwellenwert überschreiten, wird der Klassencode eingeschrieben, der die gewählte Farbklasse kennzeichnet. Damit ist der interaktive Lernvorgang des Farbklassifikators abgeschlossen.

Die beschriebenen Lernverfahren erfordern vom Benutzer keine Kenntnisse der Programmierung, der Mustererkennung oder der Bildverarbeitung, sondern lediglich das Vorzeigen der zu erkennenden Pflanzenteile. Das Trainieren des Farbklassifikators kann daher von angelerntem Personal durchgeführt werden.

Für verschiedenartige Pflanzen werden natürlich unterschiedliche Tabellen im Farbklassifikator erhalten. Sobald der Farbklassifikator für eine bestimmte Pflanzenart trainiert worden ist, kann die für diese Pflanzenart erhaltene Tabelle in einem externen Speicher abgespeichert werden, worauf der Farbklassifikator für eine andere Pflanzenart trainiert werden kann. Wenn später eine bestimmte Pflanzenart untersucht werden soll, braucht lediglich die zugehörige Tabelle in den Tabellenspeicher 53 des Farbklassifikators geladen zu werden.

Sobald der Tabellenspeicher 53 des Farbklassifikators 50 entweder durch Trainieren oder durch Laden einer in einem früheren Lernvorgang erstellten Tabelle den zu einer bestimmten Pflanzenart gehörigen Speicherinhalt hat, kann eine beliebige Anzahl von Pflanzen dieser Pflanzenart fortlaufend automatisch klassifiziert werden. Für jedes Bild einer Pflanze, das von der Farb-Videokamera 21 aufgenommen wird, liefert der Farbklassifikator 50 am Ausgang 51 bildpunktweise in Echtzeit eine Folge von binären Codezeichen "1" oder "0", wobei das binäre Codezeichen "1" angibt, daß der betreffende Bildpunkt zum Bild der Pflanze gehört, während das binäre Codezeichen "0" anzeigt, daß der Bildpunkt zum Bild des Hintergrunds gehört. Das Bild wird auf diese Weise binarisiert, wobei die Binarisierung jedoch nicht nach Helligkeitsstufen, sondern nach vorher gelernten Farbklassen erfolgt.

Der Ausgang 51 des Farbklassifikators 50 ist mit dem Eingang einer Formerkennungseinheit 60 verbunden. Die Formerkennungseinheit 60 enthält einen Bildspeicher 61, der für jeden Bildpunkt eine Speicherzelle enthält, deren Adresse in eindeutiger Beziehung zu den Koordinaten des Bildpunktes in dem aufgenommenen Bild steht. Der Bildspeicher 61 wird vom Steuer- und Rechenwerk 40 synchron mit der Bildabtastung so gesteuert, daß gleichzeitig mit der Abtastung jedes Bildpunktes die zugeordnete Speicherzelle im Bildspeicher 61 adressiert wird. In die adressierte Speicherzelle wird das für diesen Bildpunkt am Ausgang 51 des Farbkorrelators 50 erscheinende binäre Codezeichen "1" oder "0" eingeschrieben. Somit ist nach der vollständigen Abtastung eines Bildes das nach Farbklassen binarisierte Bild im Bildspeicher 61 gespeichert.

Die Formerkennungseinheit 60 enthält ferner einen Formrechner 62, der den Inhalt des Bildspeichers 61 nach einem vorgegebenen Programm verarbeitet, um die geometrischen Formen der segmentierten Pflanzenteile auszuwerten. Diese Auswertung kann, je nach dem Anwendungszweck des Geräts und nach der Art der Pflanzen, sehr verschieden sein. Beispielsweise können geometrische Merkmale oder Formmerkmale, wie Blattfläche, Anzahl der Blätter, Umfang der Blätter, Verhältnis von Umfang zu Fläche, Winkel zwischen den Blättern usw., berechnet werden. Das Erkennen der einzelnen Blätter kann durch Verfolgung der Konturen geschehen; hierzu kann das binarisierte Bild in ein Konturenbild umgerechnet werden. Ferner wird vorzugsweise als vereinfachte graphische Beschreibung das Skelett der Pflanze berechnet, aus dem weitere Strukturmerkmale, wie Anzahl der Blattspitzen, Symmetrie der Pflanze usw., ermittelt werden können. Alle diese Operationen können nach an sich bekannten Verfahren der Bildverarbeitung durchgeführt werden (siehe z.B.: Haberäcker "Digitale Bildverarbeitung", Hanser-Verlag 1985).

Fig. 2 zeigt als Beispiel schematisch einige Stufen dieser digitalen Bildverarbeitung im Formkanal 32: die Stufe 32a ist das im Bildspeicher 61 gespeicherte binarisierte Bild, die Stufe 32b das Konturenbild und die Stufe 32c das Skelett der Pflanze.

Die ermittelten Kenngrößen werden mit vorgegebenen Schwellenwerten verglichen, wodurch eine quantitative Klassifizierung der Pflanzen in Qualitätsklassen erreicht wird. Da alle Kenngrößen als Zahlenwerte vorliegen, können durch periodische optische Vermessung der Pflanzen quantitative periodische Wachstumsprotokolle erstellt werden, so daß frühzeitig durch Änderung der Kontrollparameter, wie Temperatur, Feuchte, Lichtzyklus, Nährstoff-Zuführung, steuernd in den Wachstumsprozeß eingegriffen werden kann.

## 2. Klassifizierung nach Farbmerkmalen

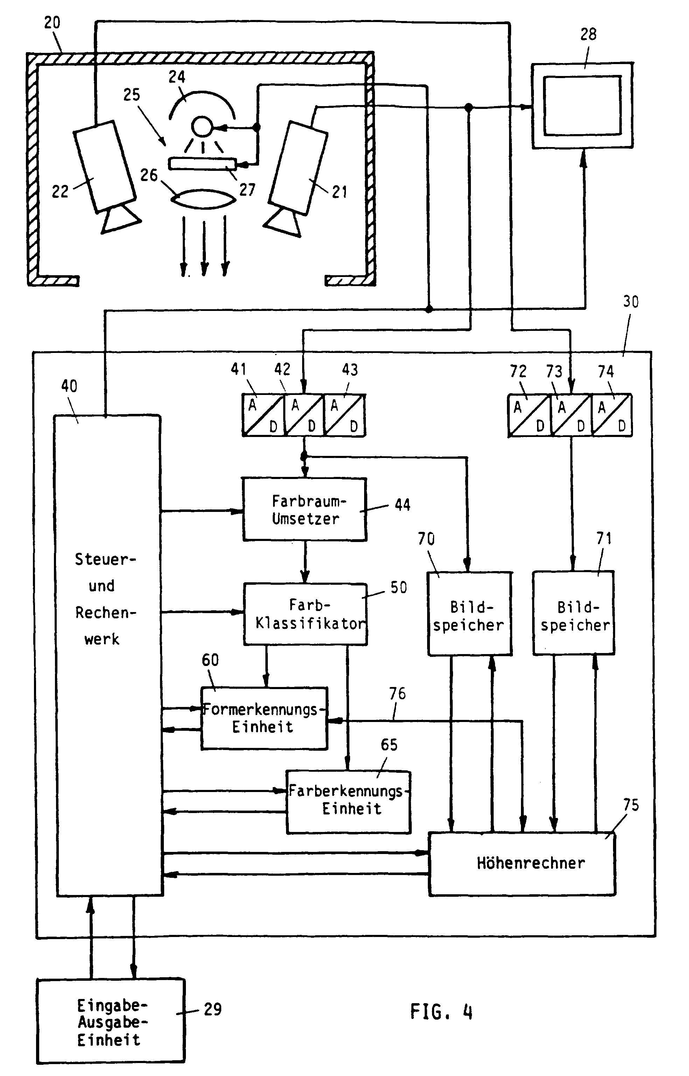

Zahlreiche Beurteilungsmerkmale für den Zustand einer Pflanze beziehen sich auf die Farbe. Die Farbmerkmale können durch die Formerkennungseinheit 60 von Fig. 3 nicht ausgewertet werden, weil das im Bildspeicher 61 abgespeicherte binarisierte Bild keine Farbmerkmale mehr aufweist. Deshalb weist der Bildrechner 30 außer dem Formkanal auch einen Farbkanal auf. Die Klassifizierung nach Farbmerkmalen macht weitgehend von den gleichen Verfahrensschritten wie die zuvor beschriebene Klassifizierung nach Formmerkmalen Gebrauch, so daß hierfür die gleichen Schaltungsteile verwendet werden können. Dies wird durch Fig. 4 verdeutlicht, die das Blockschaltbild des gesamten Bildrechners 30 zusammen mit dem Meßkopf 20, dem Monitor 28 und der Eingabe-Ausgabe-Einheit 29 zeigt. Der Bildrechner 30 enthält zunächst außer dem Steuer- und Rechenwerk 40 die bereits zuvor beschriebenen Bestandteile des Formkanals, nämlich die Analog-Digital-Umsetzer 41, 42, 43, den Farbraum-Umsetzer 44, den Farbklassifikator 50 und die Formerkennungseinheit 60. Der Farbkanal benötigt ebenfalls Analog-Digital-Umsetzer für die RGB-Signale und einen Farbraum-Umsetzer von gleicher Art wie der Formkanal. In Fig. 4 ist daher angenommen, daß diese Bestandteile den beiden Kanälen gemeinsam sind. Ferner benötigt der Farbkanal auch einen Farbklassifikator, der aber im Gegensatz zum Farbklassifikator des Formkanals nicht nur eine Klassifikation nach zwei Farbklassen "Pflanze" und "Hintergrund", sondern eine Klassifikation nach mehreren unterschiedlichen gelernten Farbklassen ermöglichen muß, damit auch unterschiedlich gefärbte Pflanzenteile, wie Blätter, Stengel, Knospen usw., automatisch erkannt werden können. Da der zuvor beschriebene Farbklassifikator 50 so ausgebildet ist, daß er auch diese Forderung erfüllt, ist in Fig. 4 angenommen, daß auch der Farbklassifikator 50 dem Formkanal und dem Farbkanal gemeinsam ist, indem die am Ausgang 51 abgegebenen Signale im Formkanal und die an der Ausgangsgruppe 58 abgegebenen Signale im Farbkanal verwendet werden. Es wäre natürlich auch möglich, im Farbkanal einen weiteren, gleichzeitig arbeitenden Farbklassifikator parallel zum Farbklassifikator 50 zu verwenden. In jedem Fall erfolgt das Trainieren des Farbklassifikators für den Farbkanal in der zuvor beschriebenen Weise so, daß er die nacheinander eintreffenden Bildpunkte nach unterschiedlichen gelernten Farbklassen klassifizieren kann und für jeden Bildpunkt einen Klassencode ausgibt, der die Farbklasse kennzeichnet, zu der der Bildpunkt gehört.

Wie die Figuren 3 und 4 zeigen, ist an die Ausgangsgruppe 58 des Farbklassifikators 50 eine Farberkennungseinheit 65 angeschlossen, die im wesentlichen den gleichen Aufbau wie die Formerkennungseinheit 60 hat. Sie enthält gemäß Fig. 3 ebenfalls einen Bildspeicher 66 sowie einen Farbrechner 67. Im Bildspeicher 66 wird für jeden abgetasteten Bildpunkt der für diesen Bildpunkt vom Farbklassifikator 50 gelieferte Klassencode gespeichert. Im Bildspeicher 66 steht somit nach der vollständigen Abtastung eines Bildes ein stark vereinfachtes digitalisiertes Farbbild der Pflanze, das nur einige wenige unterschiedliche Farben aufweist. Als Beispiel ist in Fig. 2 im Farbkanal 33 bei 33a das digitalisierte Bild einer Pflanze mit den drei Farbklassen "Blattspitzen", "Stengelspitze" und "Blattansatz" dargestellt, wie es im Bildspeicher 66 der Farberkennungseinheit 65 abgespeichert ist.

Die Auswertung der Farbklassen des im Bildspeicher 66 abgespeicherten digitalisierten Farbbildes kann beispielsweise dadurch geschehen, daß der Farbrechner 67 eine quantitative zonenweise Vermessung der Gesamtfläche jeder der unterschiedlichen Farbklassen durchführt. Dies ist in Fig. 2 bei 33b dargestellt. Die ermittelten Werte werden dann mit vorgegebenen Schwellenwerten verglichen, wodurch eine Einteilung der Pflanzen in Qualitätsklassen ermöglicht wird. So läßt der Anteil derjenigen Pflanzenteile, welche eine gelernte Grünfärbung aufweisen, auf den Reifezustand schließen. Damit kann man beispielsweise die ausreichende Keimung von Keimlingen quantitativ ausmessen und solche Keimlinge in Wachstums-Qualitätsklassen einteilen.

### 3. Bestimmung der Pflanzenhöhe

Fig. 4 zeigt auch die Bestandteile des Bildrechners 30, die den zur Bestimmung der Pflanzenhöhe dienenden Höhenkanal bilden. Als Beispiel ist angenommen, daß für die Bestimmung der Pflanzenhöhe die aus der Photogrammetrie bekannte Stereo-Triangulation angewendet wird. Bei diesem Verfahren müssen zur Bestimmung der Höhe korrespondierende Bildpunkte in zwei Stereo-Aufnahmen gefunden und automatisch zur Deckung gebracht werden. Dies ist bei der klassischen Anwendung der Stereo-Triangulation, nämlich der Auswertung von Luftaufnahmen mit gut strukturierten Bodenbildern, kein Problem. Bei glatten, uniformen Blättern einer Pflanze hingegen ist es meist schwierig, in zwei Stereo-Aufnahmen Bildpunkte zu finden, die einander eindeutig zugeordnet werden können. Aus diesem Grund enthält der Meßkopf 20 den Lichtmuster-Projektor 25, mit dem Strukturen als optische Markierung auf die Pflanze projiziert werden können. Solche Strukturen können z.B. zufällige Punktmuster, streifenförmige Muster oder gitterförmige Muster mit guten Korrelationseigenschaften, d.h. mit ausgeprägten Kreuzkorrelationsmaxima sein. Der Lichtmuster-Projektor kann auch Gleichlicht projizieren, sofern bereits genügend strukturierte Pflanzenteile vorliegen. Wenn die für die Stereo-Vermessung benötigten Muster bei der Farbklassifikation stören, werden von jeder Pflanze zwei Aufnahmen erstellt, nämlich eine erste Aufnahme mit homogener Weißlichtbeleuchtung zur Farbklassifikation und anschließend eine Stereo-Aufnahme mit Musterprojektion zur Stereo-Triangulation.

Für die Stereo-Aufnahme werden zwei gleiche Kameras benötigt, die in einem definierten Abstand voneinander angeordnet und unter entsprechenden Winkeln auf die Pflanze gerichtet sind. Bei dem dargestellten und beschriebenen Beispiel ist angenommen, daß eine dieser beiden Kameras die Farb-Videokamera 21 ist, deren Bildsignale auch für die Farbklassifikation mit anschließender Form- und Farbauswertung verwendet werden. Deshalb ist die zweite Kamera 22 eine Farb-Videokamera gleicher Art. Dies ist jedoch nicht zwingend erforderlich; für die Stereo-Triangulation mit oder ohne Lichtmusterprojektion würden auch zwei Schwarz-Weiß-Kameras genügen. In diesem Fall wäre jedoch zusätzlich noch als dritte Kamera eine Farb-Videokamera für die Farbklassifikation mit anschließender Form- und Farbauswertung erforderlich.

Für die Auswertung der Stereo-Aufnahmen im Höhenkanal werden die von den beiden Farb-Videokameras 21 und 22 aufgenommenen Bilder in digitalisierter Form in zwei Bildspeichern 70 und 71 gespeichert. Der Bildspeicher 70 kann zu diesem Zweck die digitalisierten RGB-Signale von den Ausgängen der Analog-Digital-Umsetzer 41, 42, 43 empfangen. Für die Digitalisierung der von der Farb-Videokamera 22 gelieferten RGB-Signale ist eine zweite Gruppe von Analog-Digital-Umsetzern 72, 73, 74 gleicher Art vorgesehen, deren Ausgangssignale zu dem Bildspeicher 71 übertragen werden.

Der Höhenkanal enthält ferner einen Höhenrechner 75, der die in den Bildspeichern 70 und 71 gespeicherten digitalisierten Bilder zur Bestimmung der Höhe der Pflanze auswertet. Hierzu muß der Höhenrechner 75 zunächst übereinstimmende Bildpunkte in den beiden Bildern ermitteln; dann muß er die dreidimensionalen Koordinaten der gefundenen Bildpunkte berechnen; schließlich muß er aus den berechneten Koordinaten den größten Abstand eines Bildpunktes vom Boden bzw. den kleinsten Abstand eines Bildpunktes von den Kameras ermitteln, um die Höhe der Pflanze zu bestimmen. Alle diese Schritte sind aus der Anwendung der Stereo-Triangulation in der Bildverarbeitung und Photogrammetrie bekannt und brauchen daher hier nicht im einzelnen erläutert zu werden.

Es sei nur kurz erwähnt, daß die Verschiebung eines Pflanzenteils zwischen den beiden Stereo-Aufnahmen, deren Kenntnis zur Höhenbestimmung erforderlich ist, aufgrund der aufprojizierten hochfrequenten Muster in Form zufälliger Hell/Dunkel-Strukturen durch Kreuzkorrelation entsprechender Bildzeilen entlang der Epipolarlinie ermittelt werden kann. Die Epipolarlinie läßt sich folgendermaßen definieren: Ein bestimmter Bildpunkt in dem von einer der beiden Kameras aufgenommenen Bild liegt auf einem Strahl, der durch den Brennpunkt des Objektivs und durch den zugehörigen Gegenstandspunkt geht. Dieser Strahl wird von der anderen Kamera als Linie gesehen; diese Linie ist die Epipolarlinie. Die Bedeutung der Epipolarlinie liegt darin, daß ein bestimmter Bildpunkt in einem der beiden Stereobilder nicht an einer beliebigen Stelle des anderen Stereobildes, sondern nur auf der Epipolarlinie liegen kann. Der Bildpunkt braucht also nur entlang der Epipolarlinie gesucht zu werden. Dadurch wird die Rechenzeit zum Auffinden zusammengehöriger Bildpunktpaare und zur Bestimmung der gegenseitigen Verschiebung wesentlich verkürzt. Die Kreuzkorrelation läßt nicht nur zusammengehörige Bildpunktpaare erkennen, sondern zeigt durch die Lage des Maximums der Kreuzkorrelationsfunktion zugleich die gegenseitige Verschiebung der Bildpunkte an.

In Fig. 4 ist eine weitere vorteilhafte Maßnahme dargestellt, durch die die Rechenzeit zum Auffinden zusammengehöriger Bildpunktpaare in den in den Bildspeichern 70 und 71 gespeicherten digitalisierten Stereobildern wesentlich verkürzt werden kann. Zu diesem Zweck besteht eine Verbindung 76 zwischen der Formerkennungseinheit 60 und dem Bildrechner 65. Über diese Verbindung kann die Formerkennungseinheit 60 dem Höhenrechner 75 Bildbereiche mitteilen, die als zur Pflanze gehörig identifiziert worden sind. Da die vom Höhenrechner 75 zu korrelierenden Bildpunkte in solchen Bildbereichen liegen müssen, wird dadurch der Suchbereich, den der Höhenrechner 75 in den Bildspeichern 70 und 71 für die Stereoauswertung durchforschen muß, erheblich eingeschränkt. Es genügt, wenn dem Höhenrechner 75 die Information über die mit der Farbklassifikation segmentierten Bildbereiche von Pflanzenteilen nur für das Bild einer der beiden Videokameras mitgeteilt wird, da er die entsprechenden Bildbereiche im Bild der anderen Videokamera dann leicht auffinden kann. Auf diese Weise kann die zur Auswertung von Form- und Farbmerkmalen vorgenommene Farbklassifikation ohne wesentlichen Mehraufwand auch bei der Höhenbestimmung vorteilhaft ausgenutzt werden.

Fig. 2 zeigt schematisch im Höhenkanal 34 bei 34a die beiden in den Bildspeichern 70 und 71 gespeicherten digitalen Stereobilder der Pflanze und des aufprojizierten Lichtmusters und bei 34b die aus diesen Bildern vom Höhenrechner 75 berechnete Pflanzenhöhe h.

Die Steuerung des Lichtmustererzeugers 27 durch das Steuer- und Rechenwerk 40 ermöglicht nicht nur die Umschaltung zwischen Gleichlicht und Lichtmusterprojektion, sondern auch die Auswahl oder Erzeugung von Lichtmustern, die für den jeweiligen Anwendungsfall besonders günstig sind.

Alternativ zur Bestimmung der Pflanzenhöhe durch Stereo-Triangulation mit zwei Kameras können auch andere, an sich bekannte Verfahren zur Entfernungsmessung angewendet werden, beispielsweise die Meßverfahren auf der Grundlage der Lichtschnitt-Methoden. In diesem Fall wird der Lichtmustererzeuger 27 vorzugsweise auf die Projektion von linienhaften Strukturen umgestellt. Dieses Verfahren erfordert nur eine Kamera und einen Lichtmusterprojektor.

Wenn die Beleuchtungseinrichtung 24 durch eine stroboskopisch gepulste Lichtquelle gebildet ist, werden die Lichtimpulse ebenfalls vom Steuer- und Rechenwerk 40 ausgelöst, wie in Fig. 4 angedeutet ist.

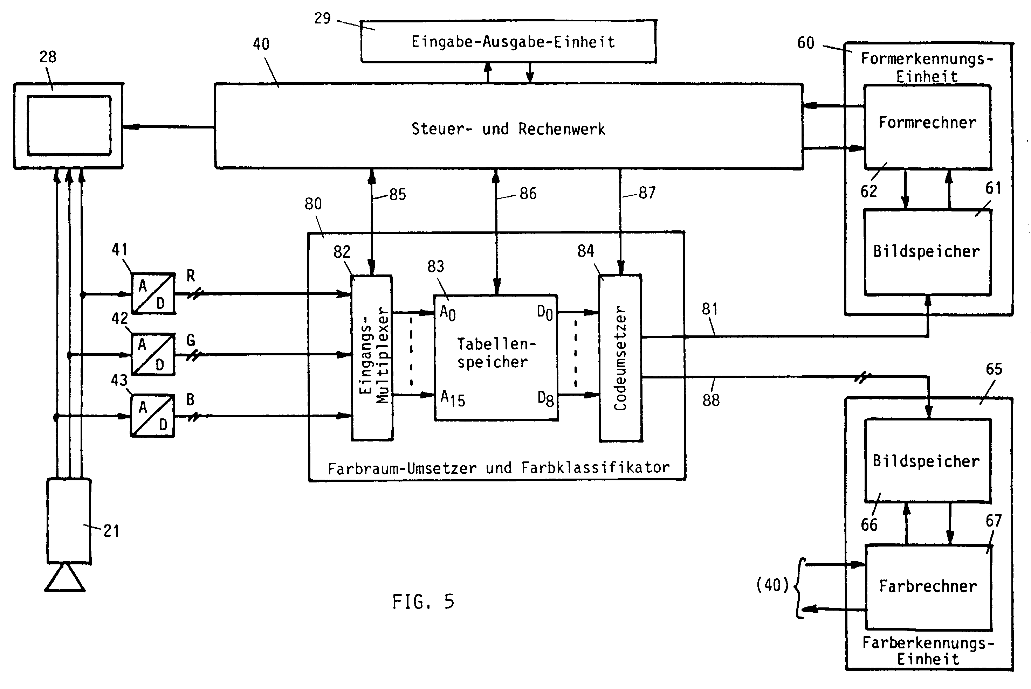

Fig. 5 zeigt eine abgeänderte Ausführungsform der Schaltungsbestandteile von Fig. 3. Gegenüber der Ausführungsform von Fig. 3 besteht lediglich der Unterschied, daß der Farbraum-Umsetzer 44 und der Farbklassifikator 50 zu einem kombinierten Farbraum-Umsetzer und Farbklassifikator 80 zusammengefaßt sind, der einen Eingangs-Multiplexer 82, einen Tabellenspeicher 83 und einen Codeumsetzer 54 enthält. Bei dieser Ausführungsform wird die Tatsache ausgenutzt, daß in einem Tabellenspeicher nicht nur einfache Zuordnungen abgespeichert werden können, sondern auch komplexe Zuordnungen, die sich durch Berechnung aus mehreren einfachen Zuordnungen ergeben. Der Eingangs-Multiplexer 82 empfängt die digitalisierten RGB-Signale von den Ausgängen der Analog-Digital-Umsetzer 41, 42, 43 und legt diese Signale an die Adresseneingänge $A_0$ bis $A_{15}$ des Tabellenspeichers 83 an, der für jede Kombination von digitalen RGB-Signalen eine Speicherzelle enthält. In jeder Speicherzelle des Tabellenspeichers 83 ist unmittelbar der Farbklassencode der in dem IHS-Farbraum umgerechneten Farbklasse gespeichert, die dem als Adresse zugeführten RGB-Signal zugeordnet ist. Der kombinierte Farbraum-Umsetzer und Farbklassifikator 80 liefert somit in gleicher Weise wie der Farbklassifikator 50 von Fig. 3 an einem Ausgang 81 zur Formerkennungseinheit 60 binäre Signale, die die Zugehörigkeit der nacheinander abgetasteten Bildpunkte zum Bild der Pflanze oder zum Bild des Hintergrunds kennzeichnen, und an einer Ausgangsgruppe 88 zur Farberkennungseinheit 65 digitale Codegruppen, die die Zugehörigkeit der nacheinander abgetasteten Bildpunkte zu Pflanzenteilen mit unterschiedlichen Farbklassen kennzeichnen. Diese Vorgänge laufen unter der Steuerung durch das Steuer- und Rechenwerk 40 über Verbindungen 85, 86 und 87 ab. Die Farbklassen können von dem kombinierten Farbraum-Umsetzer und Farbklassifikator 80 in der zuvor beschriebenen Weise durch Trainieren anhand von vorgezeigten Bildausschnitten gelernt werden, wobei sich für die Bedienungsperson kein Unterschied ergibt; es muß lediglich das Steuer- und Rechenwerk 40 so programmiert sein, daß es beim Erstellen der Tabelle jeweils die erforderliche Umrechnung aus dem RGB-Farbraum in den IHS-Farbraum vornimmt.

Es sind natürlich verschiedene weitere Abänderungen des beschriebenen Verfahrens und der zur Durchführung des Verfahrens dienenden Anordnung möglich. So können insbesondere der Farbraum-Umsetzer 45 und/oder der Farbklassifikator 50 von Fig. 3 bzw. der kombinierte Farbraum-Umsetzer und Farbklassifikator 80 von Fig. 5 anstatt durch die beschriebenen Tabellenrechner auch durch schnelle algorithmische Rechenwerke oder mit neuronalen Netzwerken realisiert sein.

**Patentansprüche**

1. Verfahren zur automatischen optischen Klassifikation von Pflanzen, bei welchem von einer Videokamera (21) ein Bild von jeweils einer Pflanze (12) aufgenommen wird, die von der Videokamera (21) gelieferten Videosignale des aufgenommenen Bildes bildpunktweise digitalisiert werden, ein digitalisiertes Bild der Pflanze (12) in einem Bildspeicher (61, 66) gespeichert wird und das gespeicherte digitalisierte Bild zur Klassifikation der Pflanze (12) durch einen Bildrechner (30) ausgewertet wird, dadurch gekennzeichnet, daß das Bild der Pflanze (12) von einer Farb-Videokamera (21) aufgenommen wird, daß die digitalisierten Farb-Videosignale vor der Speicherung des digitalisierten Bildes bildpunktweise nach vorgegebenen Farbklassen (in 50; in 80) klassifiziert werden, die einerseits dem Bild der Pflanze (12) und andererseits dem Bild des Hintergrunds zugeordnet sind, daß die Segmentierung des Bildes der Pflanze (12) vom Bild des Hintergrunds aufgrund der Zugehörigkeit der Bildpunkte zu den vorgegebenen Farbklassen erfolgt, daß aus dem segmentierten Bild der Pflanze (12) geometrische Formmerkmale und Farbmerkmale ermittelt werden und daß die ermittelten Form- und Farbmerkmale zur Ableitung eines Qualitätsmaßes ausgewertet werden.

2. Verfahren nach Anspruch 1, dadurch gekennzeichnet, daß die Farbmerkmale aufgrund der Zugehörigkeit der Bildpunkte zu verschiedenen Farbklassen, die dem Bild der Pflanze (12) zugeordnet sind, ermittelt werden.

3. Verfahren nach Anspruch 1 oder 2, dadurch gekennzeichnet, daß die ermittelten Form- und/oder Farbmerkmale mit vorgegebenen Schwellenwerten verglichen werden und daß das Qualitätsmaß aus dem Vergleichsergebnis abgeleitet wird.

4. Verfahren nach einem der vorhergehenden Ansprüche, dadurch gekennzeichnet, daß die Farbklassifikation in einem transformierten Farbraum erfolgt.

5. Verfahren nach Anspruch 4, dadurch gekennzeichnet, daß die Farb-Videokamera (21) RGB-Signale liefert und daß die digitalisierten RGB-Signale in digitale IHS-Signale umgesetzt werden.

6. Verfahren nach einem der vorhergehenden Ansprüche, dadurch gekennzeichnet, daß die Farbklassifikation durch einen durch Vorzeigen interaktiv trainierbaren Farbklassifikator (50; 80) erfolgt.

7. Verfahren nach Anspruch 6, dadurch gekennzeichnet, daß zum Trainieren des Farbklassifikators (50; 80) wenigstens ein Ausschnitt des von der Farb-Videokamera (21) aufgenommenen Bildes markiert wird, der möglichst viele Bildpunkte einer zu erkennenden Farbklasse enthält, daß im Farbklassifikator (50; 80) für jeden Bildpunkt des markierten Bildausschnitts der Inhalt einer dem Farbwert des Bildpunktes in dem verwendeten Farbraum zugeordneten Speicherzelle (in 53; in 83) inkrementiert wird und daß nach der Auswertung aller Bildpunkte des bzw. jedes markierten Bildausschnitts alle Speicherzellen, deren Inhalte infolge der Inkrementierung größer als ein vorgegebener Schwellenwert sind, als zu der zu erkennenden Farbklasse gehörig gekennzeichnet werden.

8. Verfahren nach Anspruch 7, dadurch gekennzeichnet, daß die von den gekennzeichneten Speicherzellen in dem verwendeten Farbraum gebildeten Cluster zum Schließen von Lücken einer dreidimensionalen Dilatation mit anschließender Erosion unterzogen werden.

9. Verfahren nach Anspruch 7, dadurch gekennzeichnet, daß bei der Inkrementierung des Inhalts der dem Farbwert eines Bildpunktes zugeordneten Speicherzelle die Inhalte von Speicherzellen, die benachbarten Speicherzellen im verwendeten Farbraum zugeordnet sind, um Beträge inkrementiert werden, die umso kleiner sind, je größer die Abstände der diesen Speicherzellen zugeordneten Farbwerte vom Farbwert des Bildpunktes sind.

10. Verfahren nach einem der Ansprüche 7 bis 9, dadurch gekennzeichnet, daß jeder zu erkennenden Farbklasse ein Klassencode zugeordnet wird und daß zur Kennzeichnung der Zugehörigkeit der Speicherzellen zu einer Farbklasse in jede Speicherzelle der betreffende Klassencode eingeschrieben wird.

11. Verfahren nach einem der Ansprüche 7 bis 10, dadurch gekennzeichnet, daß nach dem Trainieren des Farbklassifikators (50; 80) für jeden Bildpunkt des segmentierten Bildes einer Pflanze (12) die dem Bildpunkt zugeordnete Speicherzelle des Bildspeichers (61, 66) als zu der gleichen Farbklasse gehörig gekennzeichnet wird wie die dem Farbwert des Bildpunktes zugeordnete Speicherzelle des Farbklassifikators (50; 80).

12. Verfahren nach einem der vorhergehenden Ansprüche, dadurch gekennzeichnet, daß aus dem von der Farb-Videokamera (21) aufgenommenen Bild der Pflanze (12) nach einer Lichtschnitt-Methode die Höhe der Pflanze (12) bestimmt wird.

**13.** Verfahren nach Anspruch 12, dadurch gekennzeichnet, daß auf die Pflanze (12) ein nach der Lichtschnitt-Methode auswertbares Lichtmuster projiziert wird.

**14.** Verfahren nach einem der Ansprüche 1 bis 11, dadurch gekennzeichnet, daß von einer zweiten Farb-Videokamera (22), die in einem definierten Abstand von der ersten Farb-Videokamera (21) angeordnet ist, ein zweites Bild der Pflanze (12) derart aufgenommen wird, daß die von den beiden Farb-Videokameras (21, 22) aufgenommenen Bilder Stereobilder der Pflanze (12) sind, daß die von der zweiten Farb-Videokamera (22) gelieferten Videosignale des aufgenommenen zweiten Bildes gleichfalls bildpunktweise digitalisiert werden, daß die von den beiden Farb-Videokameras (21, 22) gelieferten digitalisierten Stereobilder jeweils in einem Bildspeicher (70, 71) gespeichert werden, und daß die digitalisierten und in den Bildspeichern (70, 71) gespeicherten Stereobilder durch einen Höhenrechner (75) zur Bestimmung der Höhe der Pflanze (12) ausgewertet werden.

**15.** Verfahren nach Anspruch 14, dadurch gekennzeichnet, daß die gespeicherten digitalisierten Stereobilder vom Höhenrechner (75) nach dem Verfahren der Stereo-Triangulation ausgewertet werden.

**16.** Verfahren nach Anspruch 15, dadurch gekennzeichnet, daß der Höhenrechner (75) die Suche nach zusammengehörigen Bildpunktpaaren in den gespeicherten digitalisierten Stereobildern in Suchbereichen durchführt, die Pflanzenteilen entsprechen, die mittels der Farbklassifikation segmentiert worden sind.

**17.** Verfahren nach einem der Ansprüche 14 bis 16, dadurch gekennzeichnet, daß auf die Pflanze (12) während der Aufnahme der Stereobilder ein Lichtmuster projiziert wird.

**18.** Anordnung zur automatischen optischen Klassifikation von Pflanzen mit einer Videokamera (21), die ein Bild von jeweils einer Pflanze (12) aufnimmt, einer Analog-Digital-Umsetzeranordnung (41, 42, 43) zur Digitalisierung der von der Videokamera (21) gelieferten analogen Bildsignale und mit einem Bildrechner (30) zur Speicherung und Auswertung des digitalisierten Videobildes, dadurch gekennzeichnet, daß die Videokamera eine Farb-Videokamera (21) ist, daß die Analog-Digital-Umsetzeranordnung (41, 42, 43) zur getrennten Digitalisierung der von der Farb-Videokamera (21) gelieferten Farb-Videosignale ausgebildet ist und daß ein Farbklassifikator (50; 80) vorgesehen ist, der die jedem Bildpunkt zugeordneten digitalisierten Farb-Videosignale vor der Speicherung des digitalisierten Videobildes nach vorgegebenen Farbklassen klassifiziert, die einerseits dem Bild der Pflanze (12) und andererseits dem Bild des Hintergrunds zugeordnet sind; und daß eine Form- und Farberkennungseinheit (60,65) vorgesehen ist, die aus dem segmentierten Bild der Pflanze (12) geometrische Formmerkmale und Farbmerkmale ermittelt, die zur Ableitung eines Qualitätsmaßes ausgewertet werden.

**19.** Anordnung nach Anspruch 18, dadurch gekennzeichnet, daß der Farbklassifikator (50; 80) durch einen Tabellenrechner (52, 53, 54; 82, 83, 84) gebildet ist, der für jeden Farbwert in dem verwendeten Farbraum einen Speicherplatz (in 53; in 83) aufweist, in dem die Zugehörigkeit zu einer der vorgegebenen Farbklassen gekennzeichnet ist, wobei die Speicherplätze entsprechend den jedem Bildpunkt zugeordneten digitalisierten Farbsignalen im Bildpunkttakt adressiert werden und die im adressierten Speicherplatz enthaltene Farbklassen-Kennzeichnung in Echtzeit ausgegeben wird.

**20.** Anordnung nach Anspruch 19, dadurch gekennzeichnet, daß der Farbklassifikator (50; 80) durch Vorzeigen von Bildausschnitten, denen jeweils eine Farbklasse zugeordnet ist, und Eingabe der entsprechenden Farbklassen-Kennzeichnung in die den Farbwerten der Bildpunkte der Bildausschnitte zugeordneten Speicherplätze trainierbar ist.

**21.** Anordnung nach Anspruch 19 oder 20, dadurch gekennzeichnet, daß die in den Speicherplätzen des Farbklassifikators (50; 80) gespeicherten Farbklassen-Kennzeichnungen in einen Farbraum umgerechnet sind, der von dem Farbraum der zur Adressierung verwendeten digitalisierten Farbsignale verschieden ist.

**22.** Anordnung nach Anspruch 18, dadurch gekennzeichnet, daß der Farbklassifikator (50; 80) durch ein arithmetisches Rechenwerk gebildet ist.

**23.** Anordnung nach einem der Ansprüche 18 bis 20, dadurch gekennzeichnet, daß zwischen die Analog-Digital-Umsetzeranordnung (41, 42, 43) und den Farbklassifikator (50) ein Farbraum-Umsetzer (44) eingefügt ist, der die digitalisierten Farb-Videosignale der Videokamera (21) in digitale Farb-Videosignale eines anderen Farbraums umsetzt.

**24.** Anordnung nach Anspruch 23, dadurch gekennzeichnet, daß die Farb-Videokamera (21) RGB-Signale liefert und daß der Farbraum-Umsetzer (44) die digitalisierten RGB-Signale in digitale IHS-Signale umsetzt.

**25.** Anordnung nach Anspruch 24, dadurch gekennzeichnet, daß der Farbraum-Umsetzer (44) durch einen Tabellenrechner (45, 46, 47) gebildet ist, der für jeden Farbwert des RGB-Farbraums einen Speicherplatz (in 46) aufweist, der durch die diesem Farbwert zugeordneten RGB-Signale adressierbar ist und in dem die dem gleichen Farbwert zugeordneten IHS-Signale gespeichert sind.

26. Anordnung nach Anspruch 23 oder 24, dadurch gekennzeichnet, daß der Farbraum-Umsetzer (44) durch ein arithmetisches Rechenwerk gebildet ist.

27. Anordnung nach einem der Ansprüche 18 bis 26, gekennzeichnet durch eine Formerkennungseinheit (60), die einen Bildspeicher (61) enthält, der für jeden Bildpunkt einen Speicherplatz enthält, dessen Adresse in eindeutiger Beziehung zu den Koordinaten des Bildpunkts im Videobild steht und in die eine dem Bildpunkt vom Farbklassifikator (50; 80) zugeordnete Farbklassen-Kennzeichnung eingegeben wird, sowie einen Formrechner (62), der aufgrund der Adressen der Speicherplätze, die eine dem Bild der Pflanze (12) zugeordnete Farbklassen-Kennzeichnung enthalten, Formmerkmale der Pflanze (12) quantitativ ermittelt.

28. Anordnung nach einem der Ansprüche 18 bis 27, gekennzeichnet durch eine Farberkennungseinheit (65), die einen Bildspeicher (66) enthält, der für jeden Bildpunkt einen Speicherplatz enthält, dessen Adresse in eindeutiger Beziehung zu den Koordinaten des Bildpunkts im Videobild steht und in den eine dem Bildpunkt vom Farbklassifikator (50; 80) zugeordnete Farbklassen-Kennzeichnung eingegeben wird, sowie einen Farbrechner (67), der aufgrund der Adressen von Speicherplätzen, die dem Bild der Pflanze (12) zugeordnete unterschiedliche Farbklassen-Kennzeichnungen enthalten, Farbmerkmale der Pflanze (12) quantitativ ermittelt.

29. Anordnung nach einem der Ansprüche 18 bis 28, gekennzeichnet durch eine zweite Farb-Videokamera (22), die so im Abstand von der ersten Farb-Videokamera (21) angeordnet und auf die Pflanze (12) gerichtet ist, daß die beiden Farb-Videokameras (21, 22) zwei Stereobilder der Pflanze (12) aufnehmen, eine zweite Analog-Digital-Umsetzeranordnung (72, 73, 74) zur Digitalisierung der von der zweiten Farb-Videokamera (22) gelieferten analogen Bildsignale, Bildspeichern (70, 71) zur Speicherung der von den beiden Farb-Videokameras (21, 22) gelieferten digitalisierten Stereobilder und durch einen Höhenrechner (75), der aus den beiden gespeicherten digitalisierten Stereobildern die Höhe der Pflanze (12) berechnet.

30. Anordnung nach Anspruch 29, dadurch gekennzeichnet, daß der Höhenrechner (75) die Höhe der Pflanze (12) nach dem Verfahren der Stereo-Triangulation berechnet.

31. Anordnung nach Anspruch 30, dadurch gekennzeichnet, daß der Höhenrechner (75) die Suche nach zusammengehörigen Bildpunktpaaren in den gespeicherten digitalisierten Stereobildern in Suchbereichen durchführt, die Pflanzenteilen entsprechen, die mittels der Farbklassifikation segmentiert worden sind.

32. Anordnung nach den Ansprüchen 27 und 30, dadurch gekennzeichnet, daß die Formerkennungseinheit (60) mit dem Höhenrechner (75) zur Definition der Suchbereiche verbunden ist.

33. Anordnung nach einem der Ansprüche 29 bis 32, gekennzeichnet durch einen Lichtmuster-Projektor (26, 27), der während der Aufnahme der Stereobilder ein Lichtmuster auf die Pflanze (12) projiziert.

34. Anordnung nach Anspruch 33, dadurch gekennzeichnet, daß der Lichtmuster-Projektor (26, 27) einen zur Erzeugung unterschiedlicher Lichtmuster steuerbaren Lichtmuster-Erzeuger (27) enthält.

35. Anordnung nach Anspruch 34, dadurch gekennzeichnet, daß der steuerbare Lichtmuster-Erzeuger (27) ein räumlicher Lichtmodulator ist.

36. Anordnung nach Anspruch 35, dadurch gekennzeichnet, daß der räumliche Lichtmodulator aus einer Flüssigkristall-Matrix besteht.

37. Anordnung nach Anspruch 34, dadurch gekennzeichnet, daß der steuerbare Lichtmuster-Erzeuger (27) aus einer motorisch angetriebenen Diavorlage besteht.

38. Anordnung nach einem der Ansprüche 18 bis 37, gekennzeichnet durch eine stroboskopisch gepulste Lichtquelle zur Beleuchtung der Pflanze (12) während der Aufnahme.

39. Anordnung nach einem der Ansprüche 18 bis 38, dadurch gekennzeichnet, daß die Pflanzen (12) in Behältern (10) untergebracht sind, die durch einen optisch lesbaren Code (23) gekennzeichnet sind.

**Claims**

1. Method for automatic optical classification of plants in which by a video camera (20) an image of in each case one plant (12) is taken, the video signals of the acquired image furnished by the video camera (21) are digitized pixelwise, a digitized image of the plant (12) is stored in an image memory (61, 66) and the stored digitized image is evaluated by an image computer (30) for classification of the plant (12), characterized in that the image of the plant (12) is taken by a color video camera (21), that the digitized color video signals prior to storing of the digitized image are classified pixelwise (in 50; in 80) in accordance with predetermined color classes which are assigned on the one hand to the image of the plant (12) and on the other to the image of the background, that the segmentation of the image of the plant (12) from the image of the background is effected on the basis of the allocation of the pixels to the predetermined color classes, that from the segmented image of the plant (12) geometrical form features and color features are determined and that the determined form features and color features are evaluated for derivation of a quality measure.

2. Method according to claim 1, characterized in that the color features are determined on the basis of the allocation of the pixels to various color classes which are assigned to the image of the plant (12).

3. Method according to claim 1 or 2, characterized in that the form and/or color features determined are compared with predetermined threshold values and that the quality measure is derived from the comparison result.

4. Method according to any one of the preceding claims, characterized in that the color classification takes place in a transformed color space.

5. Method according to claim 4, characterized in that the color video camera (21) furnishes RGB signals and that the digitized RGB signals are converted to digital IHS signals.

6. Method according to any one of the preceding claims, characterized in that the color classification is effected by a color classifier (50; 80) interactively trainable by presentation.

7. Method according to claim 6, characterized in that for training the color classifier (50; 80) at least one fragment of the image taken by the color video camera (21) containing as many as possible pixels of a color class to be identified is marked, that in the color classifier (50; 80) for each pixel of the marked image fragment the content of a memory cell (in 53; in 83) allocated to the color value of the pixel in the color space used is incremented and that after the evaluation of all the pixels of the or each marked image fragment all the memory cells of which due to the incrementation the contents are greater than a pretermined threshold value are designated as belonging to the color class to be identified.

8. Method according to claim 7, characterized in that the clusters formed by the designated memory cells in the color space used are subjected to a three-dimensional dilatation with subsequent erosion to close gaps.

9. Method according to claim 7, characterized in that in the incrementation of the content of the memory cell allocated to the color value of a pixel the contents of memory cells allocated to neighbouring color values in the color space used are incremented by amounts which are the smaller the greater the distances of the color values associated with said memory cells from the color value of the pixel.

10. Method according to any one of claims 7 to 9, characterized in that a class code is allocated to each color class to be identified and that for designating the allocation of the memory cells to a color class the respective class code is written into each memory cell.

11. Method according to any one of claims 7 to 10, characterized in that after the training of the color classifier (50; 80) for each pixel of the segmented image of a plant (12) the memory cell of the image memory (61, 66) allocated to the pixel is designated as belonging to the same color class as the memory cell of the color classifier (50; 80) allocated to the color value of the pixel.

12. Method according to any one of the preceding claims, characterized in that from the image of the plant (12) taken by the color video camera (21) the height of the plant (12) is determined by a light section method.

13. Method according to claim 12, characterized in that a light pattern evaluatable by the light section method is projected onto the plant (12).

14. Method according to any one of claims 1 to 11, characterized in that by a second color video camera (22) arranged at a defined distance from the first color video camera (21) a second image of the plant (12) is taken in such a manner that the images taken by the two color video cameras (21, 22) are stereo images of the plant (12), that the video signals furnished by the second color video camera (22) of the second image taken are also digitized pixelwise, that the digitized stereo images furnished by the two color video cameras (21, 22) are in each case stored in an image memory (70, 71), and that the digitized stereo images stored in the image memories (70, 71) are evaluated by a height computer (75) for determining the height of the plant (12).

15. Method according to claim 14, characterized in that the stored digitized stereo images are evaluated by the height computer (75) according to the method of stereo triangulation.

16. Method according to claim 15, characterized in that the height computer (75) performs the search for associated pixel pairs in the stored digitized stereo images in search regions which correspond to plant parts which have been segmented by means of the color classification.

17. Method according to any one of claims 14 to 16, characterized in that a light pattern is projected onto the plant (12) during the taking of the stereo images.

18. Arrangement for automatic optical classification of plants comprising a video camera (21) for taking an image of in each case one plant (12), an analog to digital converter arrangement (41, 42, 43) for digitizing the analog image signals furnished by the video camera (21) and an image computer (30) for storing and evaluating the digitized video image, characterized in that the video camera is a color video camera (21), that the analog to digital converter arrangement (41, 42, 43) is configured for separate digitizing of the color video signals furnished by the color video camera (21) and that a color classifier (50; 80) is provided which classifies the digitized color video signals allocated to each pixel prior to the storing of the digitized video image according to predetermined color classes which are allocated on the one hand to the image of the plant (12) and on the other to the image of the background; and that a form and color identifying unit (60, 65) is provided which from the segmented image of the plant (12) determines geometrical form features and color features that are evaluated for derivation of a quality measure.

19. Arrangement according to claim 18, characterized in that the color classifier (50; 80) is formed by a table computer (52, 53, 54; 82, 83, 84) which for each color value in the color space used comprises a memory location (in 53; in 83) in which the allocation to one of the predetermined color classes is designated, the memory locations being addressed with pixel clock rate corresponding to the digitized color signals associated with each pixel and the color class designation contained in the addressed memory location being output in real time.

20. Arrangement according to claim 19, characterized in that the color classifier (50; 80) can be trained by presentation of image fragments with each of which a color class is associated and input of the corresponding color class designation into the memory locations associated with the color values of the pixels of the image fragments.

21. Arrangement according to claim 19 or 20, characterized in that the color class designations stored in the memory locations of the color classifier (50; 80) are converted to a color space which is different from the color space of the digitized color signals used for the addressing.

22. Arrangement according to claim 18, characterized in that the color classifier (50; 80) is formed by an arithmetical calculating unit.

23. Arrangement according to any one of claims 18 to 20, characterized in that between the analog to digital converter arrangement (41, 42, 43) and the color classifier (50) a color space converter (44) is inserted which converts the digitized color video signals of the video camera (21) to digital color video signals of another color space.

24. Arrangement according to claim 23, characterized in that the color video camera (21) furnishes RGB signals and that the color space converter (44) converts the digitized RGB signals to digital IHS signals.

25. Arrangement according to claim 24, characterized in that the color space converter (44) is formed by a table computer (45, 46, 47) which for each color value of the RGB color space comprises a memory location (in 46) which is addressable by the RGB signals allocated to said color value and in which the IHS signals allocated to the same color value are stored.

26. Arrangement according to claim 23 or 24, characterized in that the color space converter (44) is formed by an arithmetic calculating unit.

27. Arrangement according to any one of claims 18 to 26, characterized by a form identifying unit (60) containing an image memory (61) which for each pixel contains a memory location of which the address is in unequivocal relationship to the coordinates of the pixel in the video image, and into which a color class designation allocated to the pixel by the color classifier (50; 80) is entered, and a form computer (62) which on the basis of the addresses of the memory locations containing a color class designation allocated to the image of the plant (12) determines quantitatively form features of the plant (12).

28. Arrangement according to any one of claims 18 to 27, characterized by a color identifying unit (65) containing an image memory (66) which for each pixel contains a memory location of which the address is in unequivocal relationship to the coordinates of the pixel in the video image, and into which a color class designation allocated to the pixel by the color classifier (50; 80) is entered, and a color computer (67) which on the basis of the addresses of the memory locations containing color class designations allocated to the image of the plant (12) determines quantitatively color features of the plant (12).

29. Arrangement according to any one of claims 18 to 28, characterized by a second color video camera (22) arranged at a distance from the first color video camera (21) and directed onto the plant (12) in such a manner that the two color video cameras (21, 22) take two stereo images of the plant (12), a second analog to digital converter arrangement (72, 73, 74) for digitizing the analog image signals furnished by the second color video camera (22), iamge memories (70, 71) for storing the digitized stereo images furnished by the two color video cameras (21, 22), and by a height computer (75) which calculates the height of the plant (12) from the two stored digitized stereo images.

30. Arrangement according to claim 29, characterized in that the height computer (75) calculates the height of the plant (12) according to the method of stereo triangulation.

31. Arrangement according to claim 30, characterized in that the height computer (75) performs the search for associated pixel pairs in the stored digitized stereo images in search regions which correspond to plant parts which have been segmented by means of the color classification.

32. Arrangement according to claims 27 and 30, characterized in that the form identifying unit (60) is connected to the height computer (75) for definition of the search regions.

33. Arrangement according to any one of claims 29 to 32, characterized by a light pattern projector (26, 27) which during the taking of the stereo images projects a light pattern onto the plant (12).

34. Arrangement according to claim 33, characterized in that the light pattern projector (26, 27) contains a light pattern generator (27) controllable for generating different light patterns.

35. Arrangement according to claim 34, characterized in that the controllable light pattern generator (27) is a three-dimensional light modulator.

36. Arrangement according to claim 35, characterized in that the three-dimensional light modulator consists of a liquid crystal matrix.

37. Arrangement according to claim 34, characterized in that the controllable light pattern generator (27) consists of a power-driven diapositive means.

38. Arrangement according to any one of claims 18 to 37, characterized by a stroboscopically pulsed light source for illuminating the plant (12) during the take.

39. Arrangement according to any one of claims 18 to 38, characterized in that the plants (12) are accommodated in containers (10) which are marked by an optically readable code (23).

## Revendications

1. Procédé de classification optique automatique de plantes, dans lequel une image d'une plante (12) est prise par une caméra vidéo (21), les signaux vidéo de l'image prise, fournis par la caméra vidéo (21), sont numérisés point par point, une image numérisée de la plante (12) est mémorisée dans une mémoire d'image (61, 66) et l'image numérisée mise en mémoire est exploitée par un ordinateur de traitement d'image (30) pour la classification de la plante (12), caractérisé en ce que l'image de la plante (12) est prise par une caméra vidéo couleur (21), en ce que les signaux vidéo-couleur numérisés sont classifiés point d'image par point d'image, avant la mémorisation de l'image numérisée et selon des catégories de couleurs (en 50; en 80), données qui sont attribuées d'une part à l'image de la plante (12) et, d'autre part, à celle de l'arrière-plan, en ce que la segmentation de l'image de la plante (12) se produit à partir de l'image de l'arrière-plan, en raison de l'appartenance des points d'image aux catégories de couleurs données, en ce que des caractéristiques de forme géométrique et des caractéristiques de couleur sont déterminées à partir de l'image segmentée de la plante (12) et en ce que les caractéristiques de forme et les caractéristiques de couleur déterminées sont exploitées pour en déduire une mesure de qualité.

2. Procédé selon la revendication 1, caractérisé en ce que des caractéristiques de couleur sont déterminées en raison de l'appartenance des points d'image aux différentes catégories de couleurs attribuées à l'image de la plante (12).

3. Procédé selon la revendication 1 ou 2, caractérisé en ce que les caractéristiques de forme et/ou de couleur déterminées sont comparées à des valeurs de seuil prédéterminées et en ce que la mesure de la qualité est déduite du résultat de la comparaison.

4. Procédé selon l'une des revendications précédentes, caractérisé en ce que la classification des couleurs se produit dans une gamme de couleurs transformées.

5. Procédé selon la revendication 4, caractérisé en ce que la caméra vidéo couleur (21) fournit des signaux RGB et en ce que les signaux numérisés RGB sont transformés en signaux numériques IHS.

6. Procédé selon l'une des revendications précédentes, caractérisé en ce que la classification des couleurs se produit par l'intermédiaire d'un classificateur de couleurs (50; 80) entraînable de façon interactive, par présentation.

7. Procédé selon la revendication 6, caractérisé en ce que, pour entraîner le classificateur de couleurs (50; 80), au moins une coupe de la vue prise par la caméra vidéo (21) couleur est marquée, coupe qui contient autant de points d'image que possible d'une catégorie de couleurs à reconnaître, en ce que, dans le classificateur de couleurs (50; 80), pour chaque point d'image de la coupe marquée de l'image, le contenu d'une cellule de mémoire (en 53; en 83) attribuée à la valeur chromatique du point d'image dans la gamme de couleurs utilisée est incrémenté et en ce que, après l'exploitation de tous les points d'image de la ou de chaque coupe d'image marquée, toutes les cellules de mémoire dont les contenus dépassent une valeur de seuil donnée, par suite d'incrémentation, sont caractérisées comme appartenant à la catégorie de couleurs à reconnaître.

8. Procédé selon la revendication 7, caractérisé en ce que les clusters de fermeture d'interstice formés, dans la gamme de couleurs utilisée, par les cellules de mémoire caractérisées, sont soumis à une dilatation tridimensionnelle qui s'accompagne d'érosion.

9. Procédé selon la revendication 7, caractérisé en ce que, lors de l'incrémentation du contenu de la cellule de mémoire attribuée à la valeur chromatique d'un point d'image, les contenus de cellules de mémoire qui sont attribuées à des valeurs chromatiques voisines dans la gamme de couleurs utilisée sont incrémentés de valeurs d'autant plus faibles que les écarts entre les valeurs chromatiques attribuées à ces cellules de mémoire et la valeur chromatique du point d'image sont plus importants.

10. Procédé selon l'une des revendications 7 à 9, caractérisé en ce qu'un code de catégorie est attribué à chaque catégorie de couleurs à reconnaître et en ce que, pour indiquer l'appartenance des cellules de mémoire à une catégorie de couleurs, le code de catégorie correspondant est inscrit dans chaque cellule de mémoire.

11. Procédé selon l'une des revendications 7 à 10, caractérisé en ce qu'après l'entraînement du classificateur de couleurs (50; 80), pour chaque point d'image de l'image segmentée d'une plante (12), la cellule de mémoire, attribuée au point d'image, de la mémoire image (61, 66) est caractérisée comme appartenant à la même catégorie de couleurs que la cellule de mémoire du classificateur de couleurs (50; 80), attribuée à la valeur chromatique du point d'image.

12. Procédé selon l'une des revendications précédentes, caractérisé en ce que, à partir de l'image de la plante (12) prise par la caméra vidéo couleur (21), la hauteur de la plante (12) est déterminée d'après une méthode de coupe optique.

13. Procédé selon la revendication 12, caractérisé en ce qu'un échantillon lumineux exploitable d'après la méthode de la coupe optique est projeté sur la plante (12).

14. Procédé selon l'une des revendications 1 à 11, caractérisé en ce qu'une deuxième image de la plante (12) est prise par une deuxième caméra vidéo couleur (22) disposée à un écartement défini de la première caméra vidéo couleur (21) de telle manière que les images prises par les deux caméras vidéo couleur (21, 22) sont des images stéréoscopiques de la plante (12), en ce que les signaux vidéo de la deuxième image prise, fournis par la deuxième caméra vidéo couleur (22), sont également numérisés point par point, en ce que les images stéréoscopiques numérisées fournies par les deux caméras vidéo couleur (21, 22) sont chaque fois mémorisées dans une mémoire image (70, 71), et en ce que les images stéréoscopiques numérisées et mémorisées dans les mémoires images (70, 71) sont exploitées par un ordinateur de traitement de la hauteur (75) afin de déterminer la hauteur de la plante (12).

15. Procédé selon la revendication 14, caractérisé en ce que les images stéréoscopiques numérisées mises en mémoire sont exploitées par l'ordinateur de traitement de la hauteur (75), d'après la méthode de la triangulation stéréoscopique.

16. Procédé selon la revendication 15, caractérisé en ce que l'ordinateur de traitement de la hauteur (75) réalise la recherche de paires de points d'image de même catégorie, dans les images stéréoscopiques numérisées et mises en mémoire, et ce à l'intérieur de zones de recherche qui correspondent à des parties de plante qui ont été segmentées au moyen d'une classification de couleur.

17. Procédé selon des revendications 14 à 16, caractérisé en ce qu'un échantillon lumineux est projeté sur la plante (12) pendant la prise des images stéréoscopiques.

18. Dispositif pour la classification optique automatique de plantes comprenant une caméra vidéo (21) qui prend à chaque fois une image d'une plante (12), un dispositif de conversion analogique-numérique (41, 42, 43) pour la numérisation des signaux vidéo analogiques fournis par la caméra vidéo (21) et un ordinateur de traitement d'image (30) pour la mémorisation et l'exploitation de l'image vidéo numérisée, caractérisé en ce que la caméra vidéo est une caméra vidéo couleur (21), en ce que le dispositif de conversion analogique-numérique (41, 42, 43) est conçu pour la numérisation séparée des signaux vidéo couleur fournis par la caméra vidéo couleur (21) et en ce qu'un classificateur de couleurs (50; 80) est prévu pour classifier les signaux vidéo couleur numérisés attribués à chaque point d'image avant la mémorisation de l'image vidéo numérisée et d'après des catégories de couleurs données qui sont attribuées, d'une part, à l'image de la plante (12) et, d'autre part, à l'image de l'arrière-plan ; et en ce qu'une unité d'identification de forme et de couleur (60, 65) est prévue, unité qui détermine, à partir de l'image segmentée de la plante (12), des caractéristiques de forme géométrique et des caractéristiques de couleur qui sont exploitées pour en déduire une mesure de qualité.

19. Dispositif selon la revendication 18, caractérisé en ce que le classificateur de couleur (50; 80) est formé par un ordinateur de traitement des tables (52, 53, 54 ; 82, 83, 84) qui présente, pour chaque valeur chromatique, dans la gamme de couleurs utilisée, un emplacement de mémoire (en 53; en 83) dans lequel l'appartenance à l'une des catégories de couleurs donnée est caractérisée, les emplacements de mémoire étant adressés, dans le cycle de points d'image, en fonction des signaux couleur numérisés attribués à chaque point d'image et la caractérisation des catégories de couleurs contenue dans l'emplacement de mémoire adressé étant sortie en temps réel.

20. Dispositif selon la revendication 19, caractérisé en ce que le classificateur de couleurs (50; 80) est entraînable par présentation de coupes d'image à chacune desquelles est attribuée une catégorie de couleurs et par introduction de la caractérisation de la catégorie de couleurs correspondante dans les emplacements de mémoire attribués aux valeurs chromatiques des points d'image des coupes d'image.

21. Dispositif selon la revendication 19 ou 20, caractérisé en ce que les caractéristiques de catégories de couleurs mémorisées dans les emplacements de mémoire du classificateur de couleurs (50; 80) sont converties dans une gamme de couleurs différente de celle des signaux couleur numérisés, utilisés pour l'adressage.

22. Dispositif selon la revendication 18, caractérisé en ce que le classificateur de couleurs (50; 80) est constitué par un opérateur arithmétique.

23. Dispositif selon l'une des revendications 18 à 20, caractérisé en ce qu'un convertisseur de gamme de couleurs (44), qui convertit les signaux vidéo couleur numérisés de la caméra vidéo (21) en signaux vidéo couleur numériques d'une autre gamme de couleurs, est introduit entre le dispositif de conversion analogique-numérique (41, 42, 43) et le classificateur de couleurs (50).

24. Dispositif selon la revendication 23, caractérisé en ce que la caméra vidéo couleur (21) fournit des signaux RGB et en ce que le convertisseur de gamme de couleurs (44) convertit les signaux RGB numérisés en signaux IHS numériques.

25. Dispositif selon la revendication 24, caractérisé en ce que le convertisseur de gamme de couleurs (44) est constitué par un ordinateur de traitement de tables (45, 46, 47) qui présente, pour chaque valeur chromatique de la gamme de couleurs RGB, un emplacement de mémoire (en 46) qui est adressable par les signaux RGB attribués à cette valeur chromatique et dans lequel les signaux IHS attribués à la même valeur chromatique sont mémorisés.

26. Dispositif selon la revendication 23 ou 24, caractérisé en ce que le convertisseur de gamme de couleurs (44) est constitué par un opérateur arithmétique.

27. Dispositif selon l'une des revendications 18 à 26, caractérisé par une unité de reconnaissance des formes (60) qui contient une mémoire image (61) qui possède elle-même, pour chaque point d'image, un emplacement de mémoire dont l'adressage est en relation univoque avec les coordonnées du point d'image sur l'image vidéo et dans laquelle est introduite une caractérisation de catégorie de couleurs attribuée au point d'image par le classificateur de couleurs (50; 80), ainsi que par un ordinateur de traitement de la forme (62) qui, en raison des adresses des emplacements de mémoire comprenant une caractérisation des catégories de couleurs attribuée à l'image de la plante (12), détecte quantitativement les caractéristiques de la plante (12).

28. Dispositif selon l'une des revendications 18 à 27, caractérisé par une unité de reconnaissance de la couleur (65) qui contient une mémoire image (66) qui renferme elle-même, pour chaque point d'image, un emplacement de mémoire dont l'adresse est en relation univoque avec les coordonnées du point d'image sur l'image vidéo et dans laquelle est introduite une caractérisation des catégories de couleurs, attribuée au point d'image par le classificateur de couleurs (50; 80), ainsi que par un ordinateur de traitement de la couleur (67) qui, en raison des adresses d'emplacements de mémoire qui renferment différentes caractérisations de catégories de couleurs, attribuées à l'image de la plante (12), détecte quantitativement des caractéristiques de couleur de la plante (12).

29. Dispositif selon l'une des revendications 18 à 28, caractérisé par une deuxième caméra vidéo couleur (22) qui est disposée avec un écartement par rapport à la première caméra vidéo (21) et orientée vers la plante (12) de telle manière que les deux caméras vidéo couleur (21, 22) prennent deux images stéréoscopiques de la plante (12), un deuxième dispositif de conversion analogique-numérique (72, 73, 74) pour la numérisation des signaux vidéo analogiques fournis par la deuxième caméra vidéo couleur (22), des mémoires vidéo (70, 71) pour la mémorisation des images stéréoscopiques fournies par les deux caméras vidéo couleur (21, 22) et par un ordinateur de traitement de la hauteur (75) qui calcule, à partir des deux images stéréoscopiques numérisées mémorisées, la hauteur de la plante (12).

30. Dispositif selon la revendication 29, caractérisé en ce que l'ordinateur de traitement de la hauteur (75) calcule la hauteur d'une plante (12) d'après la méthode de la triangulation stéréoscopique.

31. Dispositif selon la revendication 30, caractérisé en ce que l'ordinateur de traitement de la hauteur (75) effectue la recherche de paires de points d'image de même catégorie dans les images stéréoscopiques numérisées mises en mémoire, et ce dans des zones de recherche qui correspondent à des parties de plante qui ont été segmentées au moyen d'une classification des couleurs.

32. Dispositif selon les revendications 27 à 30, caractérisé en ce que l'unité de reconnaissance de la forme (60) est reliée à l'ordinateur de traitement de la hauteur (75) pour la définition des zones de recherche.

33. Dispositif selon l'une des revendications 29 à 32, caractérisé par un projecteur d'échantillons lumineux (26, 27) qui projette un échantillon lumineux sur la plante (12) pendant la prise des images stéréoscopiques.

34. Dispositif selon la revendication 33, caractérisé en ce que le projecteur d'échantillons lumineux (26, 27) renferme un générateur d'échantillons lumineux (27) commandable pour la production de différents échantillons lumineux.

35. Dispositif selon la revendication 34, caractérisé en ce que le générateur d'échantillons lumineux (27) commandable est un modulateur stéréoscopique de lumière.

36. Dispositif selon la revendication 35, caractérisé en ce que le modulateur stéréoscopique de lumière est composé d'une matrice en cristal liquide.

37. Dispositif selon la revendication 34, caractérisé en ce que le générateur d'échantillons lumineux (27) commandable est composé d'une diapositive actionnée par un moteur.

38. Dispositif selon l'une des revendications 18 à 37, caractérisé par une source lumineuse pulsée stroboscopiquement pour éclairer la plante (12) pendant la prise de vue.

39. Dispositif selon l'une des revendications 18 à 38, caractérisé en ce que les plantes (12) sont placées dans des réservoirs (10) caractérisés par un code optique (23) lisible.

FIG. 1

FIG. 2

FIG. 3

FIG. 4

FIG. 5

Eingabe-Ausgabe-Einheit — 29

28

40

Steuer- und Rechenwerk

60 — Formerkennungs-Einheit

Formrechner

62

61

Bildspeicher

EP 0 425 595 B1

85

86

87

80

82

83

84

41 — $\boxed{\frac{A}{D}}$ R

42 — $\boxed{\frac{A}{D}}$ G

43 — $\boxed{\frac{A}{D}}$ B

Eingangs-Multiplexer

$A_0$   Tabellen-speicher   $D_0$

$A_{15}$   $D_8$

Codeumsetzer

81

88

Farbraum-Umsetzer und Farbklassifikator

21

65

Bildspeicher

66

67

(40)

Farbrechner

Farberkennungs-Einheit

23